(19) Europäisches Patentamt
European Patent Office
Office européen des brevets

(11) **EP 4 707 853 A1**

(12) **EUROPEAN PATENT APPLICATION**
published in accordance with Art. 153(4) EPC

(43) Date of publication:
**11.03.2026 Bulletin 2026/11**

(21) Application number: **24858758.6**

(22) Date of filing: **30.08.2024**

(51) International Patent Classification (IPC):
**G01S 7/41** (2006.01)  **G01S 13/06** (2006.01)

(52) Cooperative Patent Classification (CPC):
**G01S 7/41; G01S 13/06**

(86) International application number:
**PCT/CN2024/116050**

(87) International publication number:
**WO 2025/045229 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.09.2023  CN 202311127963
01.09.2023  CN 202311127857
15.09.2023  CN 202311198067
28.05.2024  CN 202410678539**

(71) Applicant: **Calterah Semiconductor Technology
(Shanghai)
Co., Ltd.
Shanghai 201210 (CN)**

(72) Inventor: **LIN, Yan
Shanghai 201210 (CN)**

(74) Representative: **Balder IP Law, S.L.
Paseo de la Castellana 93
5ª planta
28046 Madrid (ES)**

(54) **TARGET DETECTION METHODS, TARGET POINT CLOUD OUTPUT METHOD, INTEGRATED
CIRCUIT, SENSOR, AND TERMINAL DEVICE**

(57) The embodiments of the present disclosure relate to the technical field of target detection, and provide a target detection method, a point cloud output method, an integrated circuit, a sensor and a terminal device. The target detection method includes: acquiring first data, generating second data according to the plurality of pieces of the first data, detecting a first target according to the first data, and detecting a second target according to the second data, which beneficial to improving the accuracy of radar target detection.

FIG. 1

## Description

## CROSS REFERENCE TO RELATED APPLICATIONS

This application claims priorities to Chinese Patent Application No. CN202311127963.3, filed on September 1, 2023, Chinese Patent Application No. CN202311127857.5, filed on September 1, 2023, Chinese Patent Application No. CN202311198067.6, field on September 15, 2023, and Chinese Patent Application No. CN202410678539.6, field on May 28, 2024, each of which is incorporated by reference herein in its entirety.

## TECHNICAL FIELD

Embodiments of the present disclosure relate to the technical field of object detection, and in particular to an object detection method, a point cloud output method, an integrated circuit, a sensor, and a terminal device.

## BACKGROUND

A radar is an electronic device that detects a target using electromagnetic waves. The working principle of the radar is as follows: a radar system first transmits electromagnetic waves by an antenna, the electromagnetic waves are reflected back in response to encountering a target, the radar system then receives echo signals generated by the reflection from the target, and determines information such as a distance, rate of distance change (radial velocity), azimuth, and altitude of the target by processing and analyzing the echo signals.

However, the accuracy of target detection by the current radar systems still needs to be improved.

## SUMMARY

Embodiments of the present disclosure provide an object detection method, a point cloud output method, an integrated circuit, a sensor, and a terminal device, which are beneficial to improving the accuracy of target detection of a radar.

According to some embodiments of the present disclosure, a first aspect of the embodiments of the present disclosure provides a target detection method. The method includes: acquiring first data, generating second data according to a plurality of pieces of first data, detecting a first target according to the first data, and detecting a second target according to the second data.

According to some embodiments of the present disclosure, a second aspect of the embodiments of the present disclosure further provides a target detection method. The method includes: acquiring a plurality of targets according to target detection results, for each respective detected target of the plurality of targets, acquiring corresponding feature information, where the feature information includes a noise feature and a signal feature for characterizing the respective detected target, and determining confidence of the respective detected target according to the feature information.

According to some embodiments of the present disclosure, a third aspect of the present disclosure further provides a target detection method. The method includes: acquiring a first target and a second target according to the target detection method according to the first aspect, for each respective target of the target first target and the target second target, acquiring corresponding feature information, where the feature information includes a noise feature and a signal feature for characterizing the respective target, and determining confidence of the first target and the second target according to the feature information.

According to some embodiments of the present disclosure, a fourth aspect of the present disclosure further provides a target point cloud output method. The method includes: acquiring a first target and a second target according to the target detection method according to the first aspect or the target detection method according to the third aspect, and performing hierarchical output on the first target and the second target.

According to some embodiments of the present disclosure, a fifth aspect of the embodiments of the present disclosure further provides a computer-readable storage medium, storing a computer program, which is executed by a processor to perform the object detection method or the target point cloud output method according to any embodiment of the present disclosure.

According to some embodiments of the present disclosure, a sixth aspect of the embodiments of the present disclosure further provides an integrated circuit. The integrated circuit includes a radio frequency (RF) module, an analog signal processing module, and a digital signal processing module connected in sequence, where the RF module is configured to generate a radio frequency transmission signal and receive a radio frequency reception signal, the analog signal processing module is configured to perform frequency down-conversion processing on the radio frequency reception signal to acquire an intermediate frequency signal, the digital signal processing module is configured to perform analog-to-digital conversion on the intermediate frequency signal to acquire digital signal data, and implement the target detection method according to the first aspect, or the target detection method according to the second aspect, or the target detection method according to the third aspect, or the target point cloud output method according to the fourth aspect according to the digital signal data.

According to some embodiments of the present disclosure, a seventh aspect of the embodiments of the present disclosure further provides a sensor. The sensor includes a carrier, the integrated circuit according to the sixth aspect, arranged on the carrier, and an antenna, arranged on the carrier, or integrated into an integrated device with the integrated circuit to be arranged on the carrier, where the integrated circuit is connected with the antenna and is configured to process an echo signal received by the antenna.

According to some embodiments of the present disclosure, an eighth aspect of the embodiments of the present disclosure further provides a terminal device. The terminal device includes: a device body, and the sensor according to any embodiment of the present disclosure arranged on the device body, where the sensor is configured for target detection and/or communication to provide reference information for the device body to operate.

In the technical solution provided by the embodiments of the present disclosure, when the second target is detected, the second data for detecting the second target is generated by the plurality of pieces of first data. The plurality of pieces of first data correspond to the observation durations of the plurality of pieces of first data, in other words, the second target has a longer observation duration than the first target. In this way, the target that is difficult to detect in a short time can be detected, and the second target can be avoided from being omitted by mistake. In addition, the detection of the first target can be realized in a short time. Therefore, the present disclosure can also realize timely and efficient detection of the first target. Thus, the present disclosure can realize hierarchical detection for different targets, and adapt to the characteristics of different targets, which can not only improve the accuracy of detection, but also ensure the timeliness of detection.

After the targets are detected, the present disclosure can further determine the confidence of each target through the feature information of the target, so that the target can be further verified, which is beneficial to improving the reliability and accuracy of target detection.

## BRIEF DESCRIPTION OF THE DRAWINGS

One or more embodiments are described by way of example with reference to the corresponding figures in the accompanying drawings, and the exemplary description is not to be construed as limiting the embodiments. Elements in the accompanying drawings that have same reference signs are represented as similar elements, and unless otherwise particularly stated, the figures in the accompanying drawings are not drawn to scale.

FIG. 1 is a first flowchart of an object detection method provided in embodiments of the present disclosure.
FIG. 2 is a second flowchart of an object detection method provided in embodiments of the present disclosure.
FIG. 3 is a third flowchart of an object detection method provided in embodiments of the present disclosure.

FIG. 4 is a fourth flowchart of an object detection method provided in embodiments of the present disclosure.
FIG. 5 is a fifth flowchart of an object detection method provided in embodiments of the present disclosure.
FIG. 6 is a sixth flowchart of an object detection method provided in embodiments of the present disclosure.
FIG. 7 is a seventh flowchart of an object detection method provided in embodiments of the present disclosure.
FIG. 8 is an eighth flowchart of an object detection method provided in embodiments of the present disclosure.
FIG. 9 is a ninth flowchart of an object detection method provided in embodiments of the present disclosure.
FIG. 10 is a flowchart of a target point cloud output method provided in embodiments of the present disclosure.
FIG. 11 is a schematic structural diagram of an integrated circuit provided in embodiments of the present disclosure.
FIG. 12 is a schematic diagram of a signal waveform according to embodiments of the present disclosure.

## DETAILED DESCRIPTION OF THE EMBODIMENTS

In order to make the objectives, technical solutions, and advantages of the embodiments of the present disclosure clearer, the various embodiments of the present disclosure are described in detail below with reference to the accompanying drawings. However, those skilled in the art may understand that, in various embodiments of the present disclosure, many technical details are provided to help the reader better understand the present disclosure. However, the technical solutions claimed in the present disclosure can still be implemented even without the technical details and various changes and modifications based on the following embodiments.

The following embodiments are divided for the convenience of description and should not constitute any limitation on the specific implementation of the present disclosure. The various embodiments can be combined with and referenced to each other on the premise of no contradiction.

In order facilitate those skilled in the art to better understand an object detection method, a point cloud output method, a medium, a circuit, a sensor, and a device provided by the embodiments of the present disclosure, the process of target detection by existing radars are described below.

Taking a FMCW (Frequency Modulated Continuous Wave) radar as an example, it transmits chirp signals frame by frame when performing target detection, where each frame of the transmitted signal includes a plurality of chirp signals. Then, digital signal processing is performed on the echo corresponding to each frame of the signal, and a radar point cloud set is output in a frame-by-frame output manner. The processing process of each frame of the echo digital signal is as follows.

1, performing FFT ( Fast Fourier Transform) within the chirp to obtain raw channel data.

2, calculating an average value of the raw channel data of all chirps within the same frame, to obtain zero-Doppler channel data of the frame.

3, subtracting the zero-Doppler channel data from the raw channel data, to obtain updated channel data.

4, performing intra-frame FFT on the updated channel data to obtain Range-Doppler (RD) spectrum data.

5, performing coherent processing (or non-coherent processing) and CFAR (Constant False-Alarm Rate ) detection on the RD spectrum data to obtain the target.

6, for the detected target, extracting range bins and Doppler bins to perform DBF ( Digital Beam Forming), and obtain a DBF spectrum of each target.

7, for each target, calculating a maximum value of the DBF spectrum, and computing an azimuth angle corresponding to the maximum value, to obtain an azimuth angle of the target.

However, the above method of performing target detection and target output in units of frames cannot adapt to all targets when facing a variety of targets. For example, during detection, there may exist a dynamic target whose motion may be readily perceived, such as a child running in a room, and there may also exist a micro-motion target whose motion is difficult to perceive, such as a person lying on a bed, who may exhibit slight movements caused by breathing.etc For the dynamic target, since its movement velocity and displacement are generally relatively large, sufficient detection information for sensing changes of the target may be accumulated within one frame period. In addition, the radar can output relatively accurate detection results for the dynamic target. For the micro-motion target, however, since its movement velocity and displacement are generally relatively small, it is likely that insufficient detection information for sensing changes of the target may be accumulated within one frame period. Moreover, echo signals formed and detected by reflection from the target are often mixed in noise, so that the detection of such micro-motion target is very difficult. In this case, it is difficult for the radar to output accurate detection results for the micro-motion target.

In order to address the above problem, the present disclosure further provides different observation durations adapted to different targets, so that for the micro-motion target without obvious motion characteristics, the detection of the target may be realized by accumulating sufficient observable position changes within a relatively long time interval, so as to achieve the purposes of more comprehensive detection of different types of targets, and more comprehensive perception and characterization of scenes. Meanwhile, for the dynamic target with obvious motion characteristics, position changes accumulated within a relatively short time interval are output efficiently and timely.

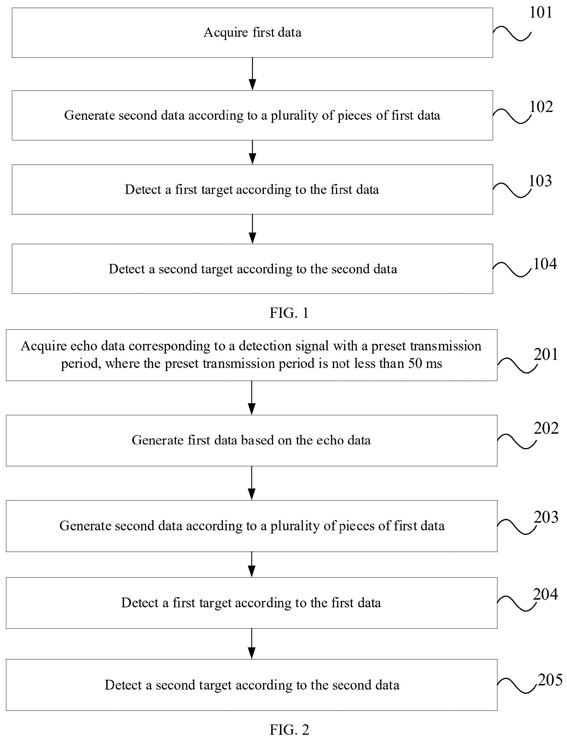

In order to achieve the above objectives, an aspect of the embodiments of the present disclosure provides an object detection method, which is used for targeted detection of different types of targets. In some embodiments, as shown in FIG. 1, the object detection method includes the following operations.

At 101, first data is acquired.

At 102, second data is generated according to a plurality of pieces of first data.

At 103, a first target is detected according to the first data.

At 104, a second target is detected according to the second data.

Each piece of first data corresponds to a period of observation duration T. Detecting the second target using the second data generated from the plurality of pieces of first data is equivalent to detecting the second target using the second data obtained within a plurality of observation durations T, so that the characteristics of the target sufficient for observation are accumulated through a longer observation duration. Therefore, the second target which is difficult to detect in a short time can be detected without missing detection. Meanwhile, the first target with obvious motion characteristics can be detected using a single piece of first data without waiting for the accumulation of plurality of pieces of first data to be detected. Therefore, the present disclosure can not only detect the first target timely and efficiently, but also detect the second target accurately, reliably and without omission, thereby providing hierarchical detection for different targets, and ensuring the accuracy and timeliness of detection for different types of targets.

It should be noted that the specific value of T is not limited by the embodiments of the present disclosure, which may be set based on actual requirements, characteristics of application scenarios, characteristics of the target, characteristics of algorithm, and other factors. For example, in some cases, the value of T is the duration of one frame period. In some cases, the motion characteristics of a dynamic target may be very prominent, and sufficient information for observing the target may be accumulated in less than one frame period. In this case, T may be set to a smaller value, such as 0.5 frame periods, 1/3 frame periods, etc. In some cases, since the algorithm needs to obtain more data to ensure that the accuracy of target detection meets requirements, T may be set to a larger value, such as 1.5 frame periods, 2 frame periods, 5 frame periods, etc. In some cases, the scenario may require more real-time output, if supported by the algorithm of target detection, T may also be set to a smaller value, such as 0.2 frame periods, 0.5 frame periods, etc. Certainly, the above is only a description of T with "frame" as the reference unit. In some cases, T may also refer to other periods, such as the chirp period duration. For example, T may be multiple consecutive chirp period durations, which is described in detail herein.

Taking a relatively enclosed scenario such as an indoor environment as an example, when human activities are detected, conventional radar target detection may not accurately obtain motion information such as velocity and acceleration of the point cloud of a micro-motion human target (e.g., a sitting person) that only has breathing activities or unconscious human movements. However, the present disclosure introduces the second data through the above embodiments to realize the point cloud output of the second target with inconspicuous motion characteristics, such as the micro-motion human target that only has breathing activities or unconscious human movements. Therefore, by increasing the amount of data relied on for target detection of the second target compared with the first target, the observation duration is extended, so that the second target has sufficient displacement within the observation duration, thereby acquiring the point cloud of the micro-motion target.

It should also be noted that the division of the first target and the second target is not limited in this embodiment. In some cases, the first target may be a dynamic target, and the second target may be a micro-motion target, where the dynamic target may be a target with a movement velocity exceeding V1, and the micro-motion target may be a target with a velocity less than V2. The specific values of V1 and V2 can be determined according to the application scenario, the actual situation of the target, etc., which would not be listed one by one herein. In some cases, the first target may be a large target, and the second target may be a small target. In some cases, based on the application scenario, combined with empirical values, big data analysis or cluster analysis, and combined with motion trajectories, etc., targets may be divided according to different motion states of the targets, to obtain the first target and the second target. In some scenarios, the first target can be defined as the target detected when a person or a vehicle moves relatively fast in the target area, and the second target can be defined as other targets with a movement velocity slower than the first target. In other cases, the dynamic targets may also be classified by combining dimensions such as movement velocity and movement amplitude. The specific classification can be comprehensively considered and set based on the application scenario, actual needs and radar monitoring performance. As long as the distinction between the first target and the second target can be realized, or hierarchical display can be realized later. For the convenience of description below, when exemplary descriptions are provided, the first target being a dynamic target and the second target being a micro-motion target would be taken as examples for description.

It should also be noted that during implementation, there may be further requirements for target detection: taking the data obtained by processing one frame of echo signal (i.e., echo signal with one frame in size) as a type of first data as an example. If more reliable detection results are expected during implementation, another type of first data can be set as the echo signal with two frames in size. Each time target detection is performed, the data obtained by processing two frames of the echo signal is acquired as the other type of first data. In this way, more data can be used for target detection, which is beneficial to ensuring higher accuracy and reliability of target detection. For another example, if it is expected that the detection results can be fed back to users or other devices in real-time during implementation, a type of first data can be set as the data obtained by processing the echo signal with 0.5 frames in size. Alternatively, when the data of preset units includes a preset number of adjacent chirp data within one frame, the data obtained by processing the echo signal of different adjacent numbers of chirp data may be used as a type of first data to implement the above embodiments, that is, as long as the periods of signal processing units corresponding to different types of data are different. In this way, not only can the echo signal be processed within a shorter duration, but also the target detection can be performed more quickly on the acquired echo signals and the results of target detection can be fed back more quickly, which is beneficial to improving the real-time feedback of the results of target detection to users or other devices, which will not be described in detail herein.

In order to facilitate better understanding by those skilled in the art of the target detection method provided in the above embodiments, a description will be given below.

At 101: first data is acquired. The present embodiment does not limit the meaning of the first data. It should be understood that, in the signal processing process of radar, corresponding data would be obtained after different digital signal processing methods are completed, such as digital signals obtained after sampling echo signals, the above raw channel data, RD spectrum data, and so on. The first data may be any of the data obtained after the above processing, and using any of the data obtained after the above processing as the first data can achieve the above effects. However, when the meaning of the first data is different, its acquisition method also varies accordingly. The above echo signals can also be echo signals generated by the reflection of any type of transmitted signal by the target, for example, echo signals generated by the reflection of signals transmitted by any CW (Continuous Wave) radar with a plurality of receiving channels and/or a plurality of transmitting channels by a target, or echo signals generated by the reflection of signals transmitted by any Frequency Modulated Continuous Wave (FMCW) radar with a plurality of receiving channels and/or a plurality of transmitting channels by a target.

For example, in some cases, the first data may be initial digital signals. In this case, the first data can be obtained by performing analog-to-digital conversion on the echo signals.

For another example, in some cases, the first data may be raw channel data. In this case, the acquisition of the first data can be realized by the above steps for acquiring the raw channel data.

For yet another example, in some cases, the first data may also be updated channel data. In this case, the acquisition of the first data can be realized by the above steps for acquiring the updated channel data.

For still another example, in some cases, the first data may also be RD spectrum data. In this case, the acquisition of the first data can be realized by the above steps for acquiring the RD spectrum data.

The implementation process of acquiring the above data is not limited by the embodiments of the present disclosure.

For example, in some embodiments, the RD spectrum data may be acquired in the following manner: performing range-dimensional Fourier transform on echo signals to obtain frequency-domain signals corresponding to at least two chirps, generating zero-Doppler channel data for each frame according to the frequency-domain signals corresponding to the chirps belonging to the same frame, removing clutter frequency-domain components from the frequency-domain signals according to the corresponding zero-Doppler channel data, to obtain dynamic frequency-domain signals for each chirp, performing slow-time dimensional Fourier transform on the data in the dynamic frequency-domain signals corresponding to the same range bin in each chirp, and generating RD spectrum data according to the transform results. In this way, the RD spectrum data is obtained by processing echo signals, determining the zero-Doppler channel data of each frame signal, further determining the dynamic frequency-domain signals of each chirp, and performing slow-time dimensional Fourier transform. In other words, providing a processing method adapted to the dynamic characteristics of the dynamic target to obtain the RD spectrum data is beneficial to improving the accuracy of indoor dynamic target detection.

For yet another example, in some embodiments, the RD spectrum data may also be acquired in the following manner: performing range-dimensional Fourier transform on echo signals to obtain frequency-domain signals corresponding to at least two chirps, generating zero-Doppler channel data for each frame according to the frequency-domain signals corresponding to the chirps belonging to the same frame, performing slow-time dimensional Fourier transform on the frequency-domain signals corresponding to the zero-Doppler channel data of the same range bin in each frame, and generating RD spectrum data according to the transformed results. In this way, the RD spectrum data is obtained by determining the zero-Doppler channel data of each frame by processing the echo signal, and further performing Fourier transform on the zero-Doppler of each frame, i.e., performing inter-frame Fourier transform. In other words, providing a processing method adapted to the micro-motion characteristics of the micro-motion target to obtain the RD spectrum data is beneficial to improving the accuracy of indoor static target detection.

In some embodiments, before performing the slow-time dimensional Fourier transform, the zero-Doppler channel data is further updated according to the zero-Doppler channel data of each frame, clutter frequency-domain components are removed from the frequency-domain signals according to the corresponding updated zero-Doppler channel data, to obtain the updated frequency-domain signals of each chirp. Correspondingly, performing slow-time dimensional Fourier transform on the frequency-domain signals corresponding to the zero-Doppler channel data of the same range bin in each frame may be implemented in the following manner: performing slow-time dimensional Fourier transform on the updated frequency-domain signals corresponding to the zero-Doppler channel data of the same range bin in each frame. In this way, considering the long-term clutter influence, the zero-Doppler channel data is updated based on the data of multiple frames, so that clutter removal is more thorough. Thus, more accurate micro-motion frequency-domain signals of the micro-motion target can be obtained, and further more accurate detection of the micro-motion target can be achieved, which is beneficial to further improving the accuracy of micro-motion target detection.

The above various types of processing can be implemented using corresponding algorithms or processes. For example, the generation of zero-Doppler channel data can be implemented using a Moving Target Indication (MTI) algorithm, a phasor mean cancellation algorithm, or the like.

In some embodiments, as shown in FIG. 2, acquiring the plurality of pieces of first data can be implemented by the following operations:

At 201, echo data corresponding to detection signals with a preset transmission period is acquired, where the preset transmission period is not less than 50 ms (milliseconds).

At 202, first data is generated based on the echo data.

Operations 203 to 205 are substantially the same as operations 102 to 104 in the embodiments shown in FIG. 1, which is not described in detail herein.

In the present embodiment, the duration of the transmission period is extended. Specifically, the duration of the transmission period is increased from substantially 20 ms per frame adopted by existing radars to 50 ms or more per frame, which ensures that when target detection is performed using frame data as the basic unit, the intra-frame data has sufficient sensitivity to dynamic points. Moreover, since the duration of the transmission period becomes longer, the velocity resolution is also improved, which also enables the output of more point clouds of the first target to achieve an effect similar to coarse imaging, and can fully utilize the space of the RD spectrum data obtained by spectrum analysis (such as 2DFFT (2D Fast Fourier Transform)).

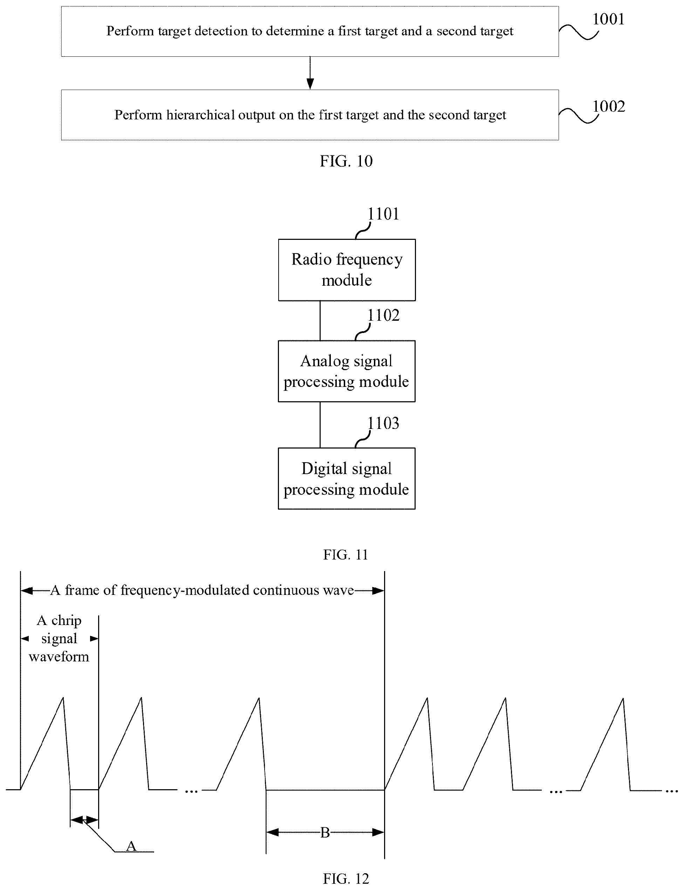

It should be noted that the method of extending the transmission period is not limited in this embodiment. It should be understood that detection signals generally includes a plurality of chirp signals. Therefore, the extension of the transmission period of the detection signals can be achieved by configuring the chirp signals. In some examples, extending the transmission period can be realized by increasing the number of included chirp signals, that is, a signal detection signal with the preset transmission period is obtained by increasing the number of chirp signals included in each frame of the detection signal. In some examples, extending the transmission period can also be realized by increasing the period of each chirp signal, that is, the detection signal with the preset transmission period is obtained by increasing the period of the included chirp signals, such as increasing the duration A (i.e., the idle time in the chirp signal) as shown in FIG. 12. In some examples, extending the transmission period can also be realized by increasing the inter-chirp idle time between the chirp signals in the detection signal, that is, the detection signal with the preset transmission period is obtained by increasing the idle time after the chirp signals in the detection signal, such as increasing the duration B as shown in FIG. 12, etc. FIG. 12 only takes the chirp signal in the FMCW waveform as a triangular wave as an example for description, with the rising edge appearing first and then the falling edge, but does not mean that the embodiments of the present disclosure can only be applied to the FMCW waveform shown in FIG. 12, which will not be described in detail herein.

In 102, second data is generated according to the plurality of pieces of first data. As mentioned above, the first data has multiple different scenarios. Correspondingly, there are also multiple different implementation methods for generating the second data. For ease of understanding, the first data being channel data and RD spectrum data is taken as examples for description.

In a case that the first data is channel data, and the channel data is obtained by subtracting zero-Doppler channel data from raw channel data, in some embodiments, generating the second data based on the plurality of pieces of first data can be implemented in the following manner: superimposing the plurality of pieces of first data to obtain the second data. In this case, since the first data is channel data and no subsequent processing is performed between the plurality of pieces of first data, the second data can be obtained by superimposition without complex operations, resulting in low implementation difficulty.

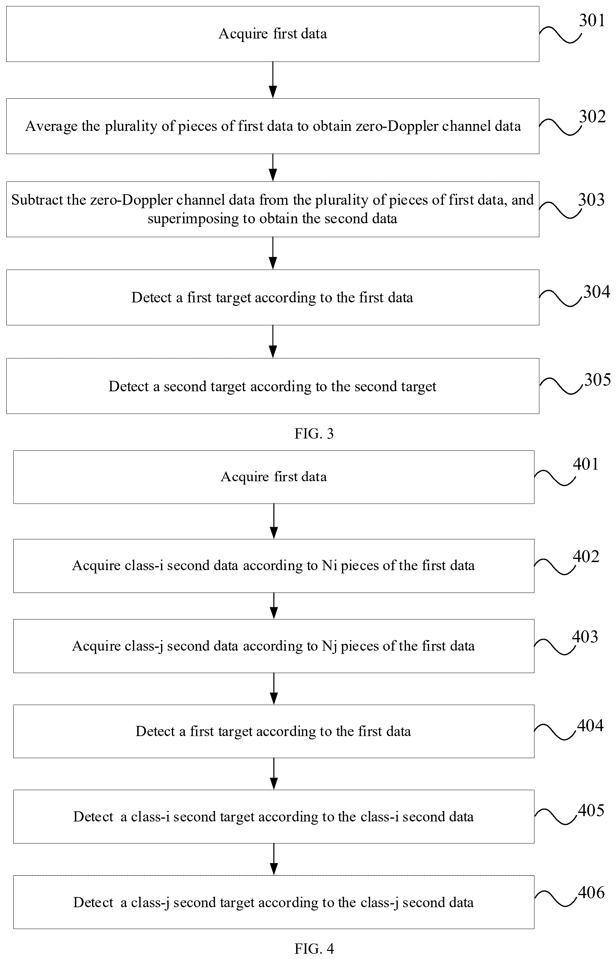

Considering that the second data is generated by the plurality of pieces of first data, the plurality of data may have the same interference, that is, there are identical noise components among the plurality of pieces of first data. Based on this, in some embodiments, as shown in FIG. 3, generating the second data according to the plurality of pieces of first data can be implemented by the following operations.

At 302: zero-Doppler channel data is obtained by averaging the plurality of pieces of first data.

At 303: the plurality of pieces of first data subtracting the zero-Doppler channel data are superimposed to obtain the second data.

Operations 301, 304, and 305 are substantially the same as operations 101, 103, and 104 in the above embodiments, which is not described herein.

Removing the zero-Doppler channel data obtained by averaging is equivalent to removing the identical noise components among different pieces of data. Therefore, in the above embodiment, two rounds of removing the noise component are performed on the echo signals. In the first round, since the average value is calculated within the first data, the noise component inside the first data is removed. In the second round, since the average value of the plurality of pieces of first data is calculated (i.e., the average is calculated outside the individual first data), the noise component among the plurality of pieces of first data is removed. For the plurality of pieces of first data, different types of noise components can be better removed, thereby extracting signal components more effectively. In this way, more accurate target detection can be realized based on the more effective signal components, thereby achieving better target detection effect.

For ease of understanding, an example is given using frames as processing units. The first round involves averaging the data within a frame to remove the noise component inside the frame. The second round involves averaging across the plurality of frames of data to obtain the inter-frame average value, which removes the noise component among the plurality of frames.

In some cases, the zero-Doppler channel data of the plurality of frames may also be compared to eliminate abnormal data. Then, the average value of the retained zero-Doppler channel data of the plurality of frames is used as the zero-Doppler channel data in operation 302, which is beneficial to avoiding sudden noise interference and further improving the accuracy of the zero-Doppler channel data.

In this way, considering the long-term clutter influence, the zero-Doppler channel data is updated based on the data of multiple frames, so that clutter removal is more thorough. Thus, more accurate frequency-domain signals corresponding to the micro-motion target can be obtained, and further more accurate detection of the micro-motion target can be achieved, which is beneficial to further improving the accuracy of micro-motion target detection.

When the first data is RD spectrum data, in some embodiments, generating the second data based on the plurality of pieces of first data may be implemented in the following manner: deriving the second data according the multiple pieces of first data. Since processing is performed on the RD spectrum data compared to the channel data, the relationship between the data becomes complicated. Therefore, the second data cannot be obtained by simple superimposition, and a certain derivation process is required. The derivation process is related to the FFT processing performed on the channel data, which is not described in detail herein. However, compared with the above scenario where the first data is channel data, when the first data is the RD spectrum data, the processing data for detecting the first target and the second target before obtaining the RD spectrum can be shared, which simplifies the process and improves efficiency.

The above is only an exemplary description. In some embodiments, other data can also be configured as the first data, which is not described in detail herein.

It should be understood that the above embodiments classify the plurality of targets into two major categories: first targets and second targets. However, considering that various micro-motion targets may exist in indoor environments, the micro-motion targets may have different motion characteristics, resulting in different observation durations required for different micro-motion targets to be observed. The amount of echo data used for target detection reflects the observation duration. For example, there is head micro-motion generated when reading different parts of a book page, and body micro-motion during slow walking indoors. The amplitude and velocity of slow walking indoors are greater, so the observation duration required for the walking to be observed is shorter than the observation duration required for the reading. Therefore, the number of frames of echo signal required to detect slow walking indoors is less than the number of frames of echo signal required for head micro-motion generated when reading different parts of a book page. If, during the target detection process, the same number of frames of a historical echo signal are merged and used based on the first echo signal for all micro-motion targets, it results in delayed detection feedback for some micro-motion targets relative to their movement process (i.e., low real-time performance), and/or failure to detect some micro-motion targets (i.e., low accuracy). Therefore, the classification of targets may be further refined based on more detailed motion characteristics. In this way, more precise target detection can be provided based on more refined target classification, thereby achieving more accurate target detection.

Based on this, taking the further classification of the second targets as an example, in some embodiments, as shown in FIG. 4, generating the second data according to the multiple first data may be implemented by the following operations.

At 402, class-i second data is acquired according to Ni pieces of the first data.

At 403, class-j second data is acquired according to Nj pieces of the first data.

Correspondingly, detecting the second target according to the second data may be implemented by the following operations.

At 405, a class-i second target is detected according to the class-i second data.

At 406, a class-j second target is detected according to the class-j second data.

Both the Class-i second data and the Class-j second data belong to the second data, i and j are integers greater than 1, Ni and Nj are positive integers, and Nj > Ni.

In this way, by further subdividing the targets and providing different amounts of first data for detection in a targeted manner, that is, providing different observation durations, it is possible to process the motion information of the second targets accumulated over different observation durations, so that the target detection results of different types of second targets can be presented from more time dimensions, more comprehensively and in real time, which is beneficial to further improving the real-time performance and accuracy of target detection.

It should be noted that operations 401 and 404 in this embodiment are substantially the same as operations 101 and 103 in the above embodiments, which is not described in detail herein.

It should also be noted that Nj and Ni are not limited herein, which can be fixed values or values that change according to information such as the total number of targets included in the target detection result of the first echo signal detected last time, the number of first targets and/or second targets, the velocity of second targets, and the acceleration of second targets. In some cases, even if Nj and Ni are fixed values, the specific values can still be set according to requirements, such as determined based on the real-time requirements for target detection. It should be understood that when the requirement for real-time performance is high, the values of Nj and Ni should not be too large. Otherwise, it may easily lead to a large amount of data to be processed currently, resulting in low processing efficiency and affecting the efficiency of target detection. In cases where the movement amplitude and velocity of the micro-motion target are too small, the values of Nj and Ni should not be too small. Otherwise, it may easily lead to failure to observe the micro-motion target during the target detection process, resulting in the problem of missing target in target detection. Therefore, different values can also be set for Nj and Ni according to the application scenario and the requirements for real-time performance during the application process.

The distinction between different second targets can be set according to requirements. For example, class-i second targets can be defined as targets generated by breathing, heartbeat, pulse beats when a person is stationary, and class-j second targets can be defined as targets generated by slow body movements when a person is stationary (such as unconscious slow body movements when sitting and falling asleep, or displacements generated by the body when concentrating, etc.). Alternatively, different types of dynamic point clouds can be divided based on the movement velocity dimension: second targets with a velocity greater than V3 can be regarded as class-i second targets, and second targets with a velocity not less than V4 can be regarded as class-j second targets, etc., which is not described in detail herein.

The above is only an exemplary description for the case where the second targets are further refined. In some cases, the first targets can also be further refined. In this case, the first data can be divided to support the detection of different first targets, etc., which is also not described in detail herein.

In 103, the first targets are detected according to the first data. As mentioned above, the first data has multiple possible scenarios. Therefore, the implementation methods of target detection based on the first data in different scenarios are also different. For example, when the first data is channel data, RD spectrum data still needs to be acquired for the detection of the first targets. However, when the first data is RD spectrum data, there is no need for processing to acquire RD spectrum data, etc. The different implementation methods of first target detection for the first data in different scenarios will not be described in detail on herein.

It should be noted that the processing such as FFT and CFAR that may be involved in the process of detecting the first targets is substantially the same as that in existing target detection, which is not described in detail herein.

In 104: a second target is detected according to the second data. Similar to the above detection of the first targets, since the second data is generated by the plurality of pieces of first data, the second data also vary with the first data. Therefore, the detection of the second targets is also different. However, the processing such as FFT and CFAR that may be involved in the target detection process is substantially the same as that in existing target detection, which is not described in detail herein.

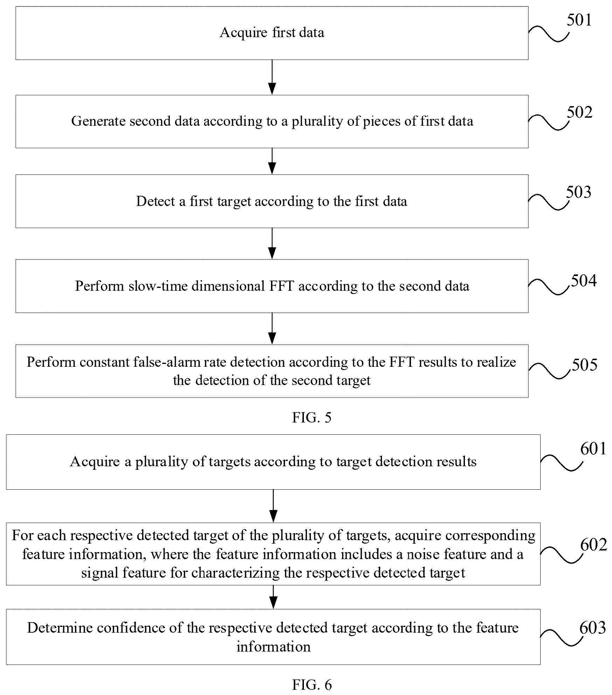

It should be understood that since the second targets require longer observation duration, specific digital signal processing can be used to improve the target detection results. For example, in some embodiments, as shown in FIG. 5, detecting the second target according to the second data can be implemented by the following operations.

At 504, slow-time dimensional FFT is performed according to the second data.

At 505, CFAR (constant false-alarm rate ) detection is performed according to the FFT results to realize the detection of the second target.

Operations 501 to 503 in FIG. 5 are substantially the same as operations 101 to 103 in the above embodiments, which is not described in detail herein.

In this way, through slow-time dimensional FFT, targets with different motion states (such as stationary targets and moving targets) can be distinguished. Therefore, the above embodiments can effectively filter out the first targets and extract valid second targets through slow-time dimensional FFT, thereby providing more accurate detection for the second targets that require long-term observation and achieving more accurate target detection results.

Slow-time dimensional FFT can also be used when detecting the first targets. By accurately extracting the first targets in this way, it is beneficial to more accurate detection of the first targets.

That is to say, acquiring RD spectrum data through slow-time dimensional FFT actually obtains the RD spectrum data by providing a processing method adapted to the dynamic characteristics of the corresponding first targets and/or second targets, which can improve the accuracy of the RD spectrum data, thereby improving the accuracy of target detection based on the RD spectrum data, that is, it is beneficial to improving the accuracy of detecting the first target and/or second target.

It should be noted that coherent integration or non-coherent integration is generally required between obtaining the FFT results and performing constant false-alarm rate detection. Through accumulating multiple pulses, the signal-to-noise ratio can be improved. It should be noted that the specific implementation methods of coherent integration and non-coherent integration are not limited by the embodiments of the present application, which can be selectively used according to application scenarios and user requirements, and the integration algorithm can also be selected based on computing power, resources, scenarios, and requirements, which is not described in detail herein.

It should be understood that for general CFAR algorithms, a relatively high threshold is generally adopted, which causes more target points to be regarded as non-targets. Based on this, in some embodiments, when performing target detection in the above embodiments, constant false-alarm rate detection can be performed according to a preset threshold, where threshold is equal to k multiply by noise estimation value and k is greater than 1.

It should be noted that, compared with the current situation where the threshold is set as k' multiply by noise estimation value to reduce clutter interference (with k' generally taking a value of several tens or even hundreds), the limitation of setting k greater than 1 herein allows the threshold to be set to a smaller value during target detection, instead of requiring the threshold to be a relatively high value. The setting of a smaller threshold enables constant false-alarm rate detection to detect more points, reduces or avoids prematurely excluding valid targets as clutter points, and is beneficial to improving the accuracy of indoor target detection.

In some cases, the value range of k is (1, 4), for example, k = 2, k = 2.4, k = 2.5, k = 3, etc. In this way, the value of k is further set to a smaller range, thereby further reducing the threshold. Therefore, with a smaller threshold, constant false-alarm rate detection can detect more points, further reducing or avoiding excluding valid targets as clutter points, which is beneficial to further improving the accuracy of indoor target detection.

The above is only an example description of the value range of parameter k in the threshold. The value of parameter k in the threshold can also be adjusted according to specific scenarios, which is not described in detail herein.

It should be understood that for relatively enclosed areas such as indoor spaces, compared with relatively open environmental areas such as outdoor spaces, the personnel, obstacles, etc. in relatively enclosed environments such as indoor spaces are more complex, resulting in low accuracy of target detection. There is an urgent need to improve the accuracy of target detection in such scenarios. In addition, clutter would inevitably be generated in the space, and clutter would interfere with target detection, leading to possible invalid targets in the detected targets.

To this end, the embodiments of the present disclosure further provide a target detection method, which can not only avoid the misjudging problem of removing targets as non-targets, but also avoid the problem of failing to accurately obtain target information by providing confidence for detected targets. In some embodiments, the flow of the target detection method is as shown in FIG. 6, including the following operations.

At 601, a plurality of targets are acquired according to target detection results.

At 602, for each respective detected target of the plurality of targets, corresponding feature information is acquired where the feature information includes a noise feature and a signal feature for characterizing the respective detected target.

At 603: confidence of each respective detected target is determined according to the feature information.

In this way, since the feature information includes a noise feature and a signal feature for characterizing the respective detected target, after the plurality of targets are detected, it is possible to determine whether each respective detected target is a valid target and confirm the confidence of each respective detected target through the feature information, so that the situation that clutter point is detected as a target can be eliminated, and targets may be further verified, which is beneficial to improving the reliability and accuracy of target detection, especially the accuracy of indoor target detection.

In order to facilitate a better understanding of the above embodiments by those skilled in the art, a description would be provided below.

In 601, the plurality of targets are obtained according to the target detection results. In this embodiment, the method for obtaining the target detection results is not limited, and can be realized by any target detection method, which is not described in detail herein.

In 602, for each respective detected target of the plurality of targets, corresponding feature information is acquired, where the feature information includes a noise feature and a signal feature for characterizing each respective detected target. In this embodiment, the feature information is not limited, which can be any information that may characterize the noise feature and the signal feature of each respective detected target. For example, in some cases, the feature signal may also be any information that reflects the distribution of the signals reflected by each respective detected target in the received echo signals. For example, the feature information can be angle spectrum, entropy value, signal-to-noise ratio, eigenvalue determined according to the covariance matrix of the echo signal, etc. Additionally, the angle spectrum may be RD spectrum, Capon spectrum, etc., which would not be listed one by one herein. The angle spectrum can be acquired from the target detection process when the target detection results are acquired. The algorithms used in generating the angle spectrum may include beamforming algorithm, Capon algorithm, multiple signal classification algorithm, estimation of signal parameters via ESPRIT ( rotational invariance techniques) algorithm, orthogonal matching pursuit algorithm, etc., which is not described in detail herein. The entropy value can be acquired directly. The signal-to-noise ratio may be acquired from the CFAR process when the target detection results are acquired, etc.

It should be noted that the methods of the target characterizing by the signal feature and the noise feature in the feature information are not limited herein, which may vary according to different feature information, and may also vary according to different scenarios and requirements.

For example, when the feature information includes an energy spectrum, the entropy value of the energy spectrum may be used as the feature information based on the characteristic that signals are generally concentrated in distribution while noise is generally scattered in distribution. When the feature information includes an angle spectrum, the relevant information of the main lobe and side lobes in the angle spectrum can be used as the feature information to characterize the a signal feature and a noise feature of the target, based on the characteristic that signals generally have greater energy (mainly reflected in the main lobe) while noise generally has smaller energy (mainly reflected in the side lobes). Additionally, when the feature information includes an angle spectrum, the feature information may be related to the local noise feature and local signal feature of the respective detected target, or related to the global a noise feature and global a signal feature of the respective detected target, etc., which is not described in detail herein.

It should be understood that when the feature information includes more noise-related content than signal-related content, it indicates a higher possibility that the signal described by the feature information is a noise signal (i.e., clutter). Therefore, based on the signal feature and the noise feature in the respective detected target, it may be determined whether the feature information of the target includes more noise-related content or more signal-related content, thereby confirming whether the respective detected target is a valid target.

It should be understood that the criteria for determining the confidence are different according to different scenarios and requirements. For example, when the noise in the environment is complex, possibly with multiple superpositions leading to high noise levels, the reference criteria for the confidence may be set to relatively broad conditions, which can reduce the risk of misjudging valid targets.

In 603: the confidence of each respective detected target is determined according to the feature information. It should be understood that clutter is inevitably generated in space, and such clutter would interfere with target detection, leading to possible invalid targets among the detected targets. Since the feature information includes the noise feature and the signal feature for characterizing each respective detected target, which may be analyzed through the feature information to confirm whether it is a valid target, i.e., to determine the confidence of each respective detected target.

It should be noted that, as mentioned above, the feature information has multiple possible forms, and correspondingly, there are also multiple implementation methods for the confidence. In order to facilitate better understanding by those skilled in the art, examples of acquiring the confidence of each respective detected target when the feature information is angle spectrum, entropy value, and signal-to-noise ratio, respectively are provided below.

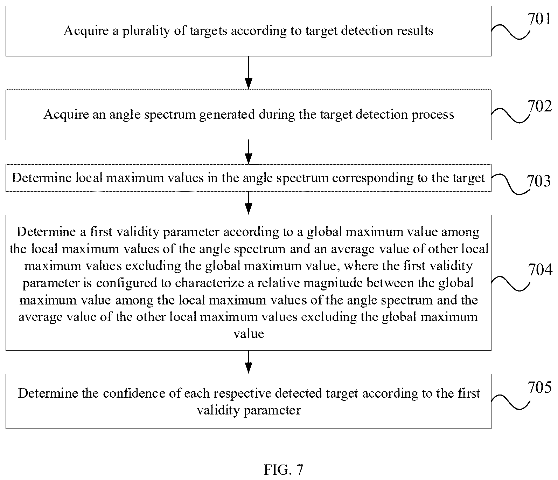

When the feature information is an angle spectrum, in some embodiments, as shown in FIG. 7, acquiring the corresponding feature information may be implemented by the following operations.

At 702, an angle spectrum generated is acquired during the target detection process.

Correspondingly, determining the confidence of each respective detected target according to the feature information may be implemented by the following operations.

At 703, local maximum values in the angle spectrum corresponding to each respective detected target are determined.

At 704, a first validity parameter is determined according to a global maximum value among the local maximum values of the angle spectrum and an average value of other local maximum values excluding the global maximum value. The first validity parameter is configured to characterize a relative magnitude between the global maximum value among the local maximum values of the angle spectrum and the average value of the other local maximum values excluding the global maximum value.

At 705, the confidence of each respective detected target is determined according to the first validity parameter.

Operation 701 is substantially the same as the steps in the above embodiments, which is not described in detail herein.

It should be noted that the specific method for determining the first validity parameter is not limited in this embodiment. In some cases, it may be a ratio of the global maximum value among the local maximum values of the angle spectrum to the average value of the other local maximum values excluding the global maximum value. In some cases, it may also be an array including the global maximum value among the local maximum values of the angle spectrum and the average value of the other local maximum values excluding the global maximum value, etc.

As mentioned above, the global maximum value among the local maximum values of the angle spectrum can correspond to signal-related content, and the other local maximum values excluding the global maximum value can correspond to noise-related content. Therefore, the first validity parameter actually reflects whether the global signal distribution is concentrated, and thus may reflect the relative energy distribution. Based on the global relative energy distribution, it is possible to more comprehensively and accurately determine whether each respective detected is a valid target, i.e., accurately determine the confidence of each respective detected target, which is beneficial to further improving the accuracy of target detection.

It should be noted that the "average value" in the average value of the other local maximum values excluding the global maximum value may be a mean, median, or mode, etc., which is not described in detail herein.

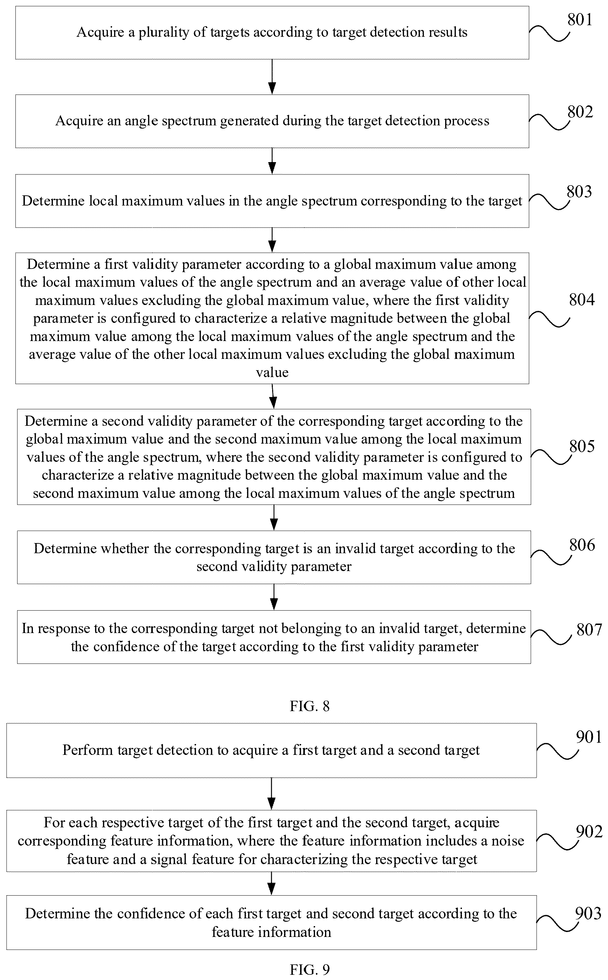

In some embodiments, as shown in FIG. 8, determining the confidence of each respective detected target according to the first validity parameter may be implemented by the following operations.

At 805, a second validity parameter of a corresponding target is determined according to the global maximum value and the second maximum value among the local maximum values of the angle spectrum. The second validity parameter is configured to characterize a relative magnitude between the global maximum value and the second maximum value among the local maximum values of the angle spectrum.

At 806, whether the corresponding target is an invalid target is determined according to the second validity parameter.

At 807, in response to the corresponding target not belonging to an invalid target, the confidence of the target is determined according to the first validity parameter.

Operations 801 to 804 are substantially the same as operations 701 to 704 in the above embodiments, which is not described in detail herein.

It should be noted that the specific method for determining the second validity parameter is not limited in this embodiment. It may be a ratio of the global maximum value to the second maximum value among the local maximum values of the angle spectrum, or the difference between the global maximum value and the second maximum value among the local maximum values of the angle spectrum, etc.

As mentioned above, the global maximum value among the local maximum values of the angle spectrum may correspond to signal-related content, and the other local maximum values excluding the global maximum value may correspond to noise-related content. Therefore, the second validity parameter actually reflects whether the local signal distribution is concentrated. Furthermore, compared with the first validity parameter, the second validity parameter may also reflect the relative energy distribution from another perspective. Thus, based on this local relative energy distribution and combined with the overall relative energy distribution, the validity of each respective target is determined from different dimensions, which is beneficial to further improving the accuracy of the confidence and thereby enhancing the accuracy of target detection.

In some embodiments, acquiring the corresponding feature information may be implemented as follows: acquiring an entropy value of the corresponding target. Correspondingly, determining the confidence of the corresponding target according to the feature information can be implemented as follows: determining the confidence of the corresponding target according to the entropy value.

It should be noted that the method for determining the entropy value is not limited herein. Any algorithm capable of quantifying the degree of disorder of the feature information can be used to obtain the entropy value, which is not described in detail herein.

It should be understood that for a valid target (i.e., a real target), its corresponding echo signals should be concentrated, so the entropy value is small. For an invalid target (i.e., a false target, such as a target detected based on clutter), its corresponding echo signals are relatively scattered, so the entropy value is large. That is to say, whether the respective detected target is a valid target may be determined according to a relative magnitude of the entropy value, thereby determining the confidence of the respective detected target.

It should be noted that the range of entropy values corresponding to the respective detected target is not limited herein, which may vary according to requirements such as the degree of disorder of the detection environment and detection accuracy, which is not described in detail herein.

In some embodiments, acquiring the corresponding feature information may be implemented as follows: acquiring a signal-to-noise ratio generated by the constant false-alarm rate detection for the corresponding target during the target detection process. Correspondingly, determining the confidence of each respective detected target according to the feature information can be implemented as follows: determine the confidence of each target according to the signal-to-noise ratio.

It should be understood that the signal-to-noise ratio is an accurate quantification of the signal portion and the noise portion in the feature information corresponding to each respective detected target. Based on the signal-to-noise ratio, relative magnitudes of the signal portion and the noise portion in the feature information may be accurately determined, thereby enabling accurate determination on whether the respective detected target is a valid target, which is beneficial to further accurately determining the confidence of the target, thereby achieving accurate target detection.

The above embodiments may also be combined. For example, in some embodiments, the embodiments of the present disclosure provide a target detection method, with flow as shown in FIG. 9 including the following operations.

At 901, target detection is performed to acquire a first target and a second target.

At 902, for each respective target of the first target and the second target, corresponding feature information is acquired, where the feature information includes a noise feature and a signal feature for characterizing the respective target.

At 903, the confidence of each first target and second target is determined according to the feature information.

It should be noted that operation 901 in this embodiment is implemented by any of the above target detection methods capable of detecting the first target and the second target. Operations 902 and 903 are substantially the same as operations 602 to 603 in the above embodiments, which is not described in detail herein.

In some embodiments, the embodiments of the present disclosure also provide a target detection method, with flow including the following operations.

1. performing constant false-alarm rate detection on the Doppler spectrum matrix according to a preset threshold to perform target detection, where the threshold is equal to k multiply by noise estimation value and k > 1.

2. generating corresponding feature information for each respective detected target of the plurality of targets respectively.

3. determining the confidence of the respective detected target according to the corresponding feature information to further confirm whether the target is a valid target.

The above operations 2 and 3 are substantially the same as operations 602 to 603 in the above embodiments, which is not described in detail herein.

It should be noted that the above operation 1 may also be replaced by any of the above solutions capable of performing target detection and acquiring detected targets. For example, inter-frame FFT is introduced in the process of generating RD spectrum data, etc., which is not described in detail herein.

It should be understood that the above embodiments detect the first target and the second target according to the target motion state (i.e., point cloud type). That is, in the time dimension, for the same duration, corresponding target objects can be divided into the first target and the second target, and may even be further subdivided. For example, according to the generated motion state, it may be subdivided into moving targets, short-term micro-motion targets, and long-term micro-motion targets. Among the detection of moving targets, the motion amplitude of each target can be used to divide into a "moving" state and a "micro-motion" state, i.e., the amplitude of "moving" is greater than the amplitude of "micro-motion". In addition, the "micro-motion" state can be divided into at least two states of "long-term micro-motion" and "short-term micro-motion" based on the time dimension, and a time period of "long-term micro-motion" is longer than a time period of "short-term micro-motion".

However, only one type of detected targets can be output based on preset frame data. For example, only dynamic point clouds or micro-motion point clouds may be output based on preset frame data. When the radar system needs to output two types of detected targets, it may only output them alternately, that is, one set of preset frame data is used to output dynamic point clouds, and another set of preset frame data is used to output micro-motion point clouds. Meanwhile, micro-motion point data is generally detected based on a single frame or multiple frames.

Therefore, the embodiments of the present disclosure further provide a target point cloud output method, which is used to display the above different targets hierarchically, so as to improve user experience. In some embodiments, its process is as shown in FIG. 10 and includes the following operations.

At 1001, target detection is performed to determine a first target and a second target.

At 1002, hierarchical output is performed on the first target and the second target.

The first target and the second target determined in operation 1001 may be the first target and the second target determined according to the target detection method provided in the above embodiments. The first target and the second target determined in operation 1001 may also be the first target and the second target with confidence determined according to the target detection method provided in the above embodiments.

However, regarding operation 1002, in some embodiments, as mentioned above, targets are subdivided into moving targets, short-term micro-motion targets, and long-term micro-motion targets according to the generated motion states. It is assumed that the three types of targets are all acquired based on data of a preset group of frames. Specifically, the data of the preset group of frames is used as a data unit for long-term micro-motion detection, at least two frames (e.g., two frames) included in the preset group of frames are used as a data unit for short-term micro-motion detection, and the data of each individual frame is used for moving target detection. Additionally, when data of, for example, 6 consecutive frames is used as a data unit for long-term micro-motion detection, data of 3 consecutive frames among them may be selected as a data unit for short-term micro-motion detection, and data of 2 consecutive frames among them may be selected as a data unit for moving target detection. Herein, a "frame" only refers to a minimum data unit used for target detection, rather than explicitly referring to a single frame in the conventional sense. For example, the data of one frame may be 1/2 (or 1/3, 0.2, 1, 2.5, 3, 5, etc.) times the data of a conventional frame.

For operation 1002, in some embodiments, when moving point clouds are detected based on single-frame data, a sliding window method may be used to output point cloud data for each frame corresponding to short-term micro-motion points, so as to further supplement the detected dynamic (motion state) points. That is, by outputting both dynamic points and short-term micro-motion points for each frame, the overall posture and partial movements of a human body may be depicted more accurately and comprehensively, thereby achieving an effect similar to imaging (imaging with relatively coarse granularity).

That is to say, with the method provided in the above embodiments, scene perception may be achieved based on echo signals under different time scales, and corresponding confidence may be set for point clouds according to preset rules, so as to realize hierarchical output of point cloud data, thereby realizing more comprehensive scene presentation and detection of all-round state information of targets. Meanwhile, based on the echo signals of one preset unit, data of at least two types of detected targets can be output simultaneously, that is, detection results of at least two types of targets are acquired based on the data of the same preset unit. Herein, the data of the preset unit may be a preset number of adjacent chirp echo signals within one frame (such as half a frame, 1/4 frame, etc.), or one frame of data, or at least two adjacent frames of echo signals, etc. For example, when the data of the preset unit is three adjacent frames of echo signals, three set types of dynamic point clouds are acquired respectively using the three adjacent frames as the data source. Specifically, on the basis of outputting the first type of dynamic point cloud (e.g., short-term micro-motion point cloud) using two adjacent frames of data and outputting the second type of dynamic point cloud (e.g., moving point cloud) using each frame of data, the third type of dynamic point cloud (e.g., long-term micro-motion point cloud) is output using the three adjacent frames of data. In addition, during point cloud presentation, different colors, shapes, etc., are set to realize hierarchical display of the three types of point cloud data.

In order to facilitate better understanding of the method provided in the above embodiments and its combinations by those skilled in the art, an example is given below. For ease of understanding, the example assumes that the first target is a moving target, the second target is a micro-motion target, and the second target may be further subdivided into long-term micro-motion targets and short-term micro-motion targets.

For a multi-channel 4D FMCW millimeter-wave radar installed in a room (e.g., on the ceiling or wall), the radar transmits electromagnetic waves to the targets in the room in units of frames. Each frame of signal may contain multiple chirp signals, and the frame period or the total transmission time of chirps within a frame is longer than that used by the conventional radars. For example, the total transmission time of chirps within a frame may be increased from 20 ms to 50 ms or more. Meanwhile, the radar receives echo signals generated by the transmitted electromagnetic waves in units of frames, and processes the received signals as follows.

At S1101, performing range windowing and range FFT on each chirp signal within the frame to obtain raw channel data.

At S1102, calculating zero-Doppler channel data of the intra-frame signal based on the raw channel data within the frame, and storing the zero-Doppler channel data.

At S1103, subtracting the zero-Doppler channel data from each chirp within the frame according to range bins.

At S1104, performing inter-chirp windowing and FFT on the data obtained in operation S1103.

At S1105, calculating modulus of all the channel data acquired in operation S1104 , and accumulating the modulus.

At S1106, using the CFAR algorithm to perform target detection on the results from operation S1105.

At S1107, extracting range bins and Doppler bins corresponding to the targets detected in operation S1106 from all azimuth channels, performing Digital Beam Forming (DBF ) on the bins, and calculating the modulus to obtain a DBF spectrum for each target.

At S1108, finding a global maximum of the DBF spectrum for each target, and taking an azimuth angle corresponding to the global maximum value as the azimuth angle of the target.

At S1109, calculating the confidence of each target based on a concentration degree of the DBF spectrum, and acquiring the output of dynamic points.

At S1110, composing a micro-motion frame using the data acquired in operation S1103 from substantially 4 frames, and performing the processes in operations S1104 to S1109, to obtain short-term micro-motion points.

4 frames may also be replaced with a duration of 1 second. It should be noted that the 1 second duration may be adaptively adjusted according to actual needs, which is not limited by the embodiments of the present disclosure, and may also be 0.8 seconds, 0.5 seconds, or 0.3 seconds, etc.

At S1111, composing a micro-motion frame using the data obtained in operation 1103 from approximately 16 frames, and performing the processes in operations S1104 to S1109, to obtain long-term micro-motion points.

16 frames may also be replaced with a duration longer than 1 second. The specific duration may be adaptively adjusted according to actual needs, which is not limited by the embodiments of the present disclosure, and may be 5 seconds, 3 seconds, or 1 second, etc.

At S1112, outputting dynamic points, short-term micro-motion points, long-term micro-motion points, and their confidence. The dynamic points, the short-term micro-motion points, and the long-term micro-motion points are displayed hierarchically during presentation, so as to facilitate more intuitive observation by users.

In some embodiments, based on the above embodiments of the target detection method, the RD matrix for long-term micro-motion points does not need to be recalculated, but may be obtained by accumulating and deriving from the RD matrix of short-term micro-motion points. The RD matrix of short-term micro-motion points is obtained by a sliding window method, so that each frame may be output. Meanwhile, the RD matrix of long-term micro-motion points may also be obtained by a sliding window method, or by processing once every preset number of frames, or by accumulating the RD matrices of short-term micro-motion points. When the RD matrix of long-term micro-motion points is obtained by accumulating the RD matrices of short-term micro-motion points, the RD matrix of long-term micro-motion points may be obtained by performing phase compensation on the frames corresponding to each RD matrix of short-term micro-motion points and then accumulating the frames.

In some embodiments, different numbers of frames may also be used to perceive the scene at different time scales. For example, the radar is set to at least two scenes such as daytime (or active or living room) scenes or nighttime (or inactive or bedroom) scenes. Corresponding to different scenes, the above divided states may be set based on different time scales, that is, the time scales of the same state are different for different scenes. For example, for a daytime living room scene, the time scale of short-term micro-motion may be set to 0.8 s, and the time scale of long-term micro-motion may be set to range from 3 s to 5 s. For a nighttime bedroom scene, the time scale of short-term micro-motion may be set to range from 1 s to 2 s, and the time scale of long-term micro-motion may be set to range from 10 s to 100 s, etc, which can realize adaptive adjustment of the scene while effectively reducing the power consumption of the radar.

In this way, all possible potential target points on the RD spectrum data may be detected using a noise reference constant false-alarm rate (NRCFAR) with an extremely low threshold, and then possible target points may be filtered out from a large number of candidate points through the DBF spectrum. The difference from conventional RD processing is that the formation of the final point cloud depends on how to filter the point cloud rather than how to detect the RD spectrum data.

That is, conventional RD processing forms RD spectrum data after performing 2D FFT, then detects target points from the RD spectrum data based on CFAR, and calculates their azimuth and elevation angles to form a point cloud. However, the indoor environment is relatively complex, with a large number of reflectors (walls, tables, chairs, furniture, etc.), leading to a large number of echoes at the same distance and multiple angles (mostly from scene reflections) and the existence of multipath phenomena. That is, among the points detected by conventional RD processing, some are targets of interest, some are multipath points, and some are false points synthesized by multi-source reflections. Therefore, the results of conventional RD processing have the phenomenon of too many noise points. On the other hand, in order to suppress noise points, conventional RD processing methods use a higher detection threshold, which also suppresses points with relatively weak signal-to-noise ratios from real targets, resulting in too few point clouds of real targets (when placed together with noise points, they appear scattered and not aggregated) or no points for low signal-to-noise ratio targets.

For a point from a real target of interest, due to the single signal component, its DBF spectrum shape must be close to a sinc function, that is, there is an obvious main peak. For multipath points, due to the difference between the outgoing phase and the incident phase, after MIMO ( Multiple-Input Multiple-Output) processing, the DBF spectrum of multipath points maynot form a main peak similar to a real target, and the energy of the DBF spectrum is relatively scattered. For false points synthesized by multi-source reflections widespread indoors, their DBF spectra also maynot form obvious main peaks. Therefore, the DBF spectrum may be used to filter candidate points.

In indoor applications, the difference between human targets and typical radar targets lies in that the velocities of various parts of the human body are different, that is, human echoes have rich velocity components. At the same time, the motion states of the human body are diverse, including low radial velocity states such as tangential movement and standing slightly shaking, which are challenges for radars that rely on radial velocity for target separation. On the other hand, the radial velocity of a certain point cloud of the human body only reflects the radial velocity of a certain part of the human body, which may differ greatly from the radial component of the actual traveling velocity of the human body. That is, the unambiguous velocity range has no substantial impact on target detection in this scenario. Specifically, by using a long chirp period to perform high-resolution velocity detection on indoor targets, the comprehensiveness of target detection can be effectively improved.

In addition, improving the velocity detection resolution has at least the following advantages:

1, depicting targets in a more refined velocity dimension, which can effectively improve the signal-to-noise ratio of each velocity unit.

2, distinguishing the same-distance echoes from two targets more finely in the velocity dimension, which can realize the simultaneous detection of two targets at the same distance.

3, improving the sensitivity of the radar to scenes, that is, improving the detection capability for low radial velocity states such as tangential movement, which has high practical value in indoor scenarios.

4, making full use of the number of points in the velocity dimension of the RD spectrum data, which can avoid waste of storage space.

Meanwhile, for the detection of micro-motion targets, processing is performed using intra-frame zero-Doppler channel data from multiple frames. Since the above processing method for dynamic points may well detect dynamic points based on the RD spectrum data, a similar processing idea may also be used for micro-motion targets. Performing inter-frame FFT on the intra-frame zero-Doppler channels of multiple frames to form inter-frame RD spectrum data, and based on the RD spectrum data, the above dynamic point processing method is used to form the final micro-motion point cloud.

In some embodiments, in order to achieve more comprehensive perception of scenes, micro-motion processing is divided into short-term micro-motion processing and long-term micro-motion processing. Short-term micro-motion point processing can use fewer frames. Compared with intra-frame processing, short-term micro-motion processing can effectively detect human bodies that are sitting still or standing motionless. Short-term micro-motion points are an effective supplement to intra-frame dynamic points. The two complement each other in real-time scene perception, and human postures and movements can be jointly depicted by dynamic points and short-term micro-motion points. Long-term micro-motion point processing uses more frames and is used to perceive more subtle scene changes, so as to assist short-term micro-motion points in detecting static human bodies.

That is, in the process of detecting dynamic point:

a, processing signals obtained at different time scales, to achieve comprehensive perception of dynamic and static targets in the scene, and outputting dynamic points, short-term micro-motion points, and long-term micro-motion points.

b, depicting the scene more finely in the velocity dimension by using high-velocity-resolution waveforms in dynamic point processing, expanding the "pool" that accommodates target point clouds.

c, performing detection in the RD domain of scene echoes by using low-threshold NRCFAR, and identifying all "bright spots" in the RD domain without missing any possible target echo points.

d, evaluating the detected candidate point set by using the DBF spectrum, and filtering out point clouds that match target features from the candidate point set as the final point cloud output.

Through the above improvements, the following can be achieved:

1, for human targets, outputting rich point clouds, which can depict human postures in both dynamic and static states, and perform point cloud tracking (coarse imaging) of human movements (such as waving).

2, filtering out a large number of widely existing noise points and multipath points in indoor environments and retaining effective weak target points, so as to improve the ability of the radar to detect weak targets.

3, enhancing the point cloud coherence of human targets, thereby improving the ability to distinguish between different human targets.

4, outputting more micro-motion point clouds for both distant and nearby stationary human targets.

5, continuously outputting dynamic point clouds even for tangentially moving targets.

In some embodiments, the signal processing process may be divided into dynamic point processing and micro-motion point processing (i.e., the "static" point processing described later in the embodiments of the present disclosure). Dynamic point processing may be intra-frame processing, mainly used to detect dynamic points with obvious radial velocity. Micro-motion point processing is inter-frame processing, by extending the observation duration, the velocity resolution is further improved, so as to perceive subtle human movements. Micro-motion point processing is further divided into short-term micro-motion point processing and long-term micro-motion point processing.

In some optional embodiments, the processing for dynamic points may be intra-frame processing, that is, using echo data of the plurality of chirps in one frame to detect dynamic targets, which specifically may include the following operations.

At S1201, range windowing and range FFT are performed.

In some examples, range windowing and range FFT are performed on Analog to Digital Converter (ADC) data of each received chirp to obtain a one-dimensional range profile. Among the above operations, windowing may or may not be applied, and different types of windows may be used for processing if windowing is applied. In addition, for pulse compression radar systems, pulse compression is performed on each chirp echo signal to obtain a one-dimensional range profile. In some cases, a FMCW (frequency-modulated continuous wave) radar may also be used in this operation. Specifically, the radar mechanism is not limited by the embodiments of the present disclosure, as long as it may obtain a one-dimensional range profile.

At S1202, zero-Doppler is removed.

In some examples, the one-dimensional range profile results of each chirp are accumulated by range bin and averaged to obtain intra-frame zero-Doppler channel data. Then, the intra-frame zero-Doppler channel data is subtracted from each chirp, thereby filtering out static targets within the frame and retaining dynamic targets within the frame.

At S1203: velocity windowing and velocity FFT are performed.

In some examples, windowing (or no windowing) is performed on the zero-Doppler-removed data along the slow-time dimensional by range bin, and slow-time dimensional FFT is perform to separate echoes at the same distance in the scene along the velocity dimension.

At S1204, inter-channel non-coherent integration of Range-Doppler Matrix (RDM), i.e., the above RD spectrum data, is performed.

In some examples, the modulus squared of the velocity FFT results of each channel is calculated, and inter-channel accumulation and averaging are performed to obtain inter-channel non-coherent gain, to obtain the RDM for target detection.

In some cases, multiple RDMs may also be formed through non-coherent integration of multiple channels or coherent integration, and subsequent detection may be performed on the multiple RDMs. Alternatively, no integration is performed, and the modulus squared of one or several channels is directly calculated for detection.

At S1205, NRCFAR is performed.

In some examples, data of the first 10 range bins (within a range of approximately 1m) from 20 Doppler channels near the zero-Doppler channel are extracted from the detection RDM, averaged, and the noise average is calculated. Each point on the detection RDM is compared with the above noise average. If a point is greater than a certain threshold, it is included in the candidate points. In order to detect all weak echo points, the threshold set herein can be obtained by modulus calculation or modulus squared calculation. Specifically, a relatively low threshold (compared with the threshold in conventional methods) is used to detect as many candidate points as possible. For example, it may be set to 10 times the noise average through modulus squared calculation. Optionally, the noise may also be selected by calculating the noise average using several range bins at the farthest distance. That is, it is mainly based on identifying a range that is relatively clean, containing only noise and no targets, so as to obtain a more accurate noise floor.

At S1206, estimation of Direction Of Arrival (DOA ) is performed.

In some examples, according to a TRX array configuration, DBF is performed on the main subarray and slave subarray channel data of the candidate points to obtain the azimuth DBF spectrum. Then, the elevation DBF is calculated by a combine method to obtain the elevation angle.

At S1207, point cloud confidence is calculated.

In some examples, if the energy of candidate points come only from a single target, its signal composition is relatively single, and the DBF spectrum is close to an ideal sinc function with an obvious main peak. Therefore, the confidence based on the azimuth DBF spectrum of the candidate points may be used to determine whether the candidate points are the desired target points. The confidence is divided into confidence 1 and confidence 2.

The calculation method of confidence 1 (conf1) may be:

$$\mathrm{conf1} = \mathrm{max}/\mathrm{peak2},$$

"max" refers to a global maximum value of the azimuth DBF spectrum, and "peak2" refers to a second maximum value of the azimuth DBF spectrum. That is, confidence 1 reflects the highest sidelobe level of the DBF spectrum. The larger confidence 1 is, the lower the highest sidelobe is, the simpler the signal component is, and the higher the possibility that the signal comes from a single target is.

The calculation method of confidence 2 (conf2) may be:

$$\mathrm{conf2} = \mathrm{max}/\mathrm{mean\,(peakoth)},$$

Where "max" is a global maximum of the azimuth DBF spectrum, "peakoth" represents all extreme values of the azimuth DBF spectrum excluding the global maximum value and the second maximum value, and "mean()" denotes the calculation of the average value. Therefore, confidence 2 reflects the degree of energy concentration of the DBF spectrum at the main peak.

It should be noted that the calculation method of the confidence in the embodiments of the present disclosure is not unique, as long as it can measure the energy concentration of the DBF spectrum. Specifically, the higher the concentration is, the purer the echo is, and the more likely it is an effective target.

In some cases, the calculation of the confidence in the embodiments of the present disclosure may be based on the azimuth DBF spectrum, but it may also be obtained by using the elevation DBF spectrum or non-azimuth non-elevation DBF spectrum.

At S1208, single-target points are extracted from an effective target.

In some examples, as mentioned above, the higher the confidence 1 of a candidate point is, the higher the possibility that it comes from a single target. Therefore, a certain threshold is set for confidence 1. If the confidence 1 of the candidate point is higher than the threshold, the target is output as a single-target point cloud. The current determination condition for a single-target point is:

$$\mathrm{conf1} > 2.$$

At S1209, dual-target points are extracted from an effective target.

In some examples, in indoor scenarios, it is inevitable that two human targets are located in the same range bin. If the echoes of the two targets fall into the same RD bin, two adjacent peaks would appear in the azimuth DBF spectrum when the two targets have a sufficient azimuth interval. In order to prevent candidate points in such cases from being filtered out by the "single-target point screening" module, the confidence 1 and the confidence 2 are used to determine dual targets. If the confidence 1 and the confidence 2 meet the following conditions simultaneously, the main lobe and the highest sidelobe of the DBF spectrum of the candidate point are output as dual targets:

$$\mathrm{conf1} < 1.5,\ \mathrm{conf2} > 2.5.$$

At S1210, supplementing point clouds.

In some examples, for point clouds that do not meet the criteria for single-target or dual-target points, if all the following conditions are met, the point clouds are output as supplementary point clouds:

$$\mathrm{conf1} > 1.5,\ \mathrm{conf2} > 3,\ \mathrm{SNR} > 10.$$

At S1211: enhancing point clouds.

In some examples, for "high-quality" point clouds, i.e., point clouds with concentrated energy and high signal-to-noise ratio (SNR) of the DBF spectrum, the left and right azimuth points of the main peak of the DBF spectrum are also output. More weight is assigned to "high-quality" point clouds in terms of quantity, enhancing the aggregation of scene point clouds. The current criteria for determining "high-quality" point clouds are:

$$\text{conf2} > 4.5 \text{ and } SNR > 30.$$

In some embodiments, in the processing of micro-motion points, micro-motion point processing may be divided into short-term micro-motion point processing and long-term micro-motion point processing. Both may be cross-frame processing operations. For example, short-term micro-motion points are processed using 4 frames, and long-term micro-motion points may be processed using data of 16 frames (with decimation by 2 applied to the 16 frames, resulting in 8 frames used finally). Except for the difference in the number of frames used, their processing flows are basically the same. To avoid interference from dynamic targets on micro-motion target detection, both use intra-frame zero-Doppler channel data as input. Specifically, the processing may include the following operations.

Micro-motion point processing is divided into short-term micro-motion point processing and long-term micro-motion point processing. Both are cross-frame processing. Short-term micro-motion points are processed using 4 frames. Long-term micro-motion points are processed using data of 16 frames (with decimation by 2 applied to the 16 frames, resulting in 8 frames used finally). Except for the difference in the number of used frames, their processing flows are substantially the same. In order to avoid interference from dynamic targets on micro-motion target detection, both use intra-frame zero-Doppler channel data as input.

The processing operations for micro-motion points are as follows: after zero-Doppler removal in operation S1202 and between operation S1203, the following operations are performed: 1, inter-frame zero-Doppler removal, and 2, inter-frame DFT. In some examples, inter-frame zero-Doppler removal refers to calculating the inter-frame zero-Doppler average of several frames for each range bin, and subtracting the average from the range bin corresponding to the zero-Doppler data of each frame. In some examples, inter-frame DFT refers to performing inter-frame DFT on the zero-Doppler channel data (after subtracting the average) of each range bin by a sliding window method (or non-sliding window method), to obtain a 2D FFT matrix for each channel.

In some embodiments, during point cloud output, hierarchical processing is performed on the output point clouds, so as to fully represent scene situations from different dimensions for users to accurately understand the meaning, purpose, and usage conditions of various types of point clouds.

In some embodiments, hierarchical display is applied to point cloud data such as dynamic points, short-term micro-motion points, long-term micro-motion points, and static points. The details are as follows:
Since dynamic points may reflect dynamic targets in the scene, they may include moving humans with obvious radial velocity, and human targets with slight shaking and most tangential movements. Overall, the confidence of dynamic points is higher than the confidence of short-term micro-motion points and long-term micro-motion points. Therefore, dynamic points may be used for track initiation and maintenance of track confidence.

Short-term micro-motion points are an effective supplement to dynamic points. That is, when a human is in a non-moving state, continuous perception of the human target is maintained by using short-term micro-motion points and the posture of the human target can be reflected to a certain extent. Thus, short-term micro-motion points may be used for continuous tracking of non-moving humans.

Meanwhile, since long-term micro-motion points use a relatively larger number of frames for micro-motion detection in the scene, the long-term micro-motion points may detect weaker micro-motion targets. Due to the use of more frames, there is obvious lag in long-term micro-motion points for a dynamic target, that is, after the target moves away from position A, long-term micro-motion points may still be seen at position A for a period of time. Therefore, the long-term micro-motion points may be used for continuous maintenance of static targets and track maintenance. For example, if a static track no longer has long-term micro-motion points and the confidence of the static track is low, consideration may be given to deleting the track.

In some embodiments, for point clouds such as single-target points, dual-target points, and supplementary point clouds:
dynamic points, long-term/short-term micro-motion points all include single-target point clouds, dual-target point clouds, and supplementary point clouds. From the perspective of point cloud confidence, the following relationship applies:
single-target point clouds > dual-target point clouds > supplementary point clouds.

Therefore, for single-target point clouds, the higher the confidence 1 and SNR of the point cloud are, the more reliable the point cloud is. Dynamic single-target point clouds may be used for track initiation, dual-target point clouds require caution when used for track initiation, and supplementary point clouds are not recommended for track initiation. Meanwhile, when tracking a confirmed track, if there are no single-target point clouds, dual-target point clouds may be used conditionally. Specifically, if the other point of the dual-target point cloud is indeed within the gate of another confirmed track, the confidence of the dual-target point cloud is increased, and it may be used for associating with the current track. In addition, if there are no dynamic points of single or dual targets around a confirmed track, supplementary point clouds may be considered for use.

In order to facilitate better understanding of the above embodiments by those skilled in the art, an example combining the target tracking application scenario is provided below.

When there is a demand for dynamic target detection, the target detection method may include the following operations:

At 1401, acquiring echo signals, performing windowing on each chirp in the echo signals, and performing range-dimensional FFT based on the windowed signals.

At 1402, determining an average value of each range bin obtained by performing range-dimensional FFT on each chirp in the same frame as zero-Doppler channel data of the corresponding frame, and subtracting the zero-Doppler channel data from a signal of each chirp to remove clutter.

At 1403, performing windowing on the data of each chirp signal with the range bin after removing clutter, to perform slow-time dimensional FFT.

At 1404, calculating modulus of the slow-time dimensional FFT results and accumulating the results, to obtain a Doppler matrix.

At 1405, using the CFAR algorithm to perform target detection on the Doppler matrix.

At 1406, extracting range bins and Doppler bins of the detected targets for performing DBF ( Digital Beam Forming) processing and calculating the modulus, to obtain DBF spectrum of the target.

At 1407, finding a global maximum of the DBF spectrum of the target, and taking an azimuth angle corresponding to the global maximum value as an azimuth angle of the target, to obtain an angle measurement result of the target.

At 1408, calculating all local maximum values of the DBF spectrum of each target of the plurality of targets.

At 1409, sorting the local maximum values calculated for the same target in descending order.

At 1410, calculating a ratio of the global maximum value to a second maximum value in the sorted results as a first validity parameter of the target.

At 1411, calculating an average value of all local maximum values of the target excluding the global maximum value, and calculating a ratio of the global maximum value to the average value as a second validity parameter.

At 1412, classifying targets with the first validity parameter greater than the first preset threshold as valid targets and assigning the targets to track pool 1, classifying remaining targets with the second validity parameter greater than the second preset threshold as potential valid targets and assigning the targets to track pool 2, and classifying the rest of the targets as invalid targets and assigning the targets to track pool 3.

At 1413, during the target clustering and tracking process, if the targets in track pool 1 meet the tracking requirements, using the targets in track pool 1, and if the targets in track pool 1 do not meet the tracking requirements, using the targets in both track pool 1 and track pool 2.

When there is a demand for micro-motion target detection, the target detection method may include the following operations:

At 1501, acquiring echo signals, performing windowing on each chirp in the echo signals, and performing range-dimensional FFT based on the windowed signals.

At 1502, determining an average value of each range bin obtained by performing range-dimensional FFT on each chirp in the same frame as zero-Doppler channel data of the corresponding frame.

At 1503, continuing to acquire zero-Doppler channel data corresponding to at least one frame of echo signals.

At 1504, performing FFT on each range bin of the acquired zero-Doppler channel data.

At 1505, calculating modulus of the FFT results and performing inter-channel summation to form a Doppler matrix.

At 1506, using k multiply by noise estimation value as a threshold to detect the Doppler matrix, and obtaining range bins and Doppler bins of candidate points, where k > 1.

At 1507, extracting the range bins and the Doppler bins of the detected targets corresponding to all azimuth channels for performing DBF processing and calculating modulus, to obtain DBF spectrum for each target among the plurality of targets.

At 1508, finding a global maximum of the DBF spectrum of each target among the plurality targets, and taking an azimuth angle corresponding to the global maximum value as an azimuth angle of each target, to obtain an angle measurement result of each target.

At 1509, calculating all local maximum values of the DBF spectrum of the plurality of targets.

At 1510, sorting the local maximum values calculated for each individual target in descending order.

At 1511, calculating a ratio of the global maximum value to a second maximum value in the sorted results as a first validity parameter of that individual target.

At 1512, calculating an average value of all local maximum values of the target excluding the maximum value, and calculating a ratio of the global maximum value to the average value as a second validity parameter of that individual target.

At 1513, classifying targets with the first validity parameter greater than the first preset threshold as valid targets and assigning the targets to track pool 1, classifying remaining targets with the second validity parameter greater than the second preset threshold as potential valid targets and assigning the targets to track pool 2, and classifying the rest of the targets as invalid targets and assigning the targets to track pool 3.

At 1514: during the target clustering and tracking process, if the targets in track pool 1 meet the tracking requirements, prioritize using the targets in track pool 1, and if the targets in track pool 1 do not meet the tracking requirements, jointly using the targets in both track pool 1 and track pool 2.

In this embodiment, after detecting each individual target from the echo signals received through the multiple receiving channels of the radar, corresponding feature information is further generated for the detected target, so that it is possible to determine whether the detected target is a valid target based on the feature information. On the basis of target detection, the determination of target validity is further performed, which reduces the false detection of noise points as targets and improves the accuracy of indoor target detection.

In this embodiment, the threshold is allowed to be set to a small value, and it is no longer required that the threshold must be a high value. Through the small threshold, the constant false-alarm rate detection can detect more points, reducing or avoiding the exclusion of valid targets by mistaking the valid targets for noise points, which is beneficial to improving the accuracy of indoor target detection.

In this embodiment, a processing method adapted to the dynamic characteristics of dynamic targets is provided to obtain the Doppler matrix, which can improve the accuracy of the Doppler matrix, thereby improving the accuracy of target detection based on the Doppler matrix, that is, it is beneficial to improving the accuracy of indoor dynamic target detection.

The division of steps in the various methods above is only for clarity of description. During implementation, the operations can be merged into one operation, or some operations can be split into multiple operations. As long as the same logical relationship is included, all such divisions fall within the protection scope of the present disclosure. Any insignificant modifications added to the algorithm or process, or insignificant designs introduced without changing the core design of the algorithm and process, also fall within the protection scope of the present disclosure.

Another aspect of the embodiments of the present disclosure further provides a computer-readable storage medium storing a computer program. When the computer program is executed by a processor, the above method embodiments are implemented.

That is, those skilled in the art would understand that all or part of the steps in the methods of the above embodiments can be completed by instructing relevant hardware through a program. The program is stored in a storage medium and includes several instructions to enable a device (which can be a single-chip microcomputer, a chip, etc.) or a processor to execute all or a portion of the steps of the method described in the various embodiments of the present disclosure. The above storage medium includes: U disk, mobile hard disk, ROM (Read-Only Memory), Random Access Memory (RAM), magnetic disk, optical disc and other media that can store program codes.

Another aspect of the embodiments of the present disclosure further provides an integrated circuit. As shown in FIG. 11, the integrated circuit includes a radio frequency module 1101, an analog signal processing module 1102, and a digital signal processing module 1103 connected in sequence.

The radio frequency module 1101 is configured to generate radio frequency transmission signals and receive radio frequency reception signals.

The analog signal processing module 1102 is configured to perform frequency down-conversion processing on the radio frequency reception signals to obtain intermediate frequency signals.

The digital signal processing module 1103 is configured to perform analog-to-digital conversion on the intermediate frequency signals to obtain digital signal data, acquiring first data, generating second data according to a plurality of pieces of first data, detecting a first target according to the first data, and detecting a second target according to the second data, and/or, the digital signal processing module 1103 is configured to perform analog-to-digital conversion on the intermediate frequency signal to obtain digital signal data, and obtaining a plurality of targets according to target detection results, for each respective detected target of the plurality of targets, acquiring corresponding feature information, where the feature information includes a noise feature and a signal feature for characterizing the respective detected target, and determining confidence of the respective detected target according to the feature information.

In some embodiments, the integrated circuit may further include a data processing module configured to process digital signals to realize target detection and/or wireless communication.

In some embodiments, the integrated circuit may be a millimeter-wave chip.

In some embodiments, the radio frequency reception signal is an echo signal formed by the transmission and/or scattering of the radio frequency transmission signal by the target, and the integrated circuit is a sensor chip.

It is easy to find that this embodiment is a circuit embodiment corresponding to the method embodiment, and this embodiment can be implemented in cooperation with the method embodiment. The relevant technical details mentioned in the method embodiment are still valid in this embodiment, and will not be described in detail herein to avoid redundancy. Correspondingly, the relevant technical details mentioned in this embodiment can also be applied in the method embodiment.

In addition, in order to highlight the innovative part of the present disclosure, units that are not closely related to solving the technical problems proposed in the present disclosure are not introduced in this embodiment. However, it does not mean that other units do not exist in this embodiment.

Another embodiment of the present disclosure relates to a sensor, which includes: a carrier, an integrated circuit arranged on the carrier, and an antenna arranged on the carrier, or the antenna integrated into an integrated device with the integrated circuit to be arranged on the carrier. The integrated circuit is connected with the antenna and is configured to process an echo signal received by the antenna. The integrated circuit is the one provided in the foregoing embodiments, i.e., the integrated circuit provided in any embodiment of the present disclosure.

When the antenna and the integrated circuit are not integrated into an integrated device, the integrated circuit is connected with the antenna through a first transmission line. The first transmission line may be a Printed Circuit Board (PCB) trace. The carrier may be a PCB, such as a development board, a data acquisition board, or a main board of a device, which will not be listed one by one herein.

Since the structure and working principle of the integrated circuit included in the sensor have been described in detail in the above embodiments, they will not be repeated herein.

An embodiment of the present disclosure provides a terminal device, which may include: a device body, and the sensor as described above arranged on the device body. The sensor is configured for target detection and/or communication to provide reference information for the device body to operate.

In some embodiments, the sensor may be arranged outside the device body. In other embodiments, the sensor may be arranged inside the device body. In further embodiments, a portion of the sensor may be arranged inside the device body and another portion may be arranged outside the device body, which is not limited by the embodiments of the present disclosure, and depends on specific circumstances.

It should be noted that the sensor can realize functions such as target detection by transmitting and receiving the radio signal, so as to provide the device body with measurement information of the detected target, thereby assisting or even controlling the device body to operate. Examples of the measurement information include at least one of relative distance, relative speed, and relative angle.

In some embodiments, the above device body may be components and products applied in fields such as transportation, consumer electronics, monitoring, in-cabin detection, and healthcare. For example, the device body may be intelligent transportation devices (such as automobiles, motorcycles, ships, subways, trains, etc.), security devices (such as cameras), liquid level/flow rate detection devices, smart wearable devices (such as bracelets, glasses, etc.), smart home devices (such as sweeping robots, door locks, televisions, air conditioners, smart lights, etc.), various communication devices (such as mobile phones, tablet computers, etc.), and devices such as road gates, smart traffic lights, smart signs, traffic cameras, and various industrial robotic arms (or robots). The device body may also be various instruments configured to detect vital sign parameters and various devices equipped with such instruments, such as in-automobile cabin detection, indoor personnel monitoring, smart medical device, consumer electronic device, etc.

In some embodiments, when the above device body is applied in an ADAS (Advanced Driving Assistance System ), the electromagnetic wave sensor serving as an on-board sensor can provide guarantees for various functional safety of the ADAS system, such as AEB (Autonomous Emergency Braking ), BSD(Blind Spot Detection), LCA (Lane Changing Assist ), RCTA (Rear Cross Traffic Alert ), etc.

In addition, the examples mentioned in the above embodiments can be freely combined, and any combination method can be understood as an embodiment. The "embodiments" or "examples" appearing in various positions in the specification do not necessarily all refer to the same embodiment, nor are they independent or alternative embodiments mutually exclusive with other embodiments. Those skilled in the art can understand that the embodiments described herein can be combined with other embodiments.

Those skilled in the art would understand that the above embodiments are specific embodiments for realizing the present disclosure. In practical applications, various changes can be made to the embodiments in form and details without departing from the scope of the present disclosure.

## Claims

1. A target detection method, comprising:

   acquiring first data,;
   generating second data according to a plurality of pieces of first data, ;
   detecting a first target according to the first data; and
   detecting a second target according to the second data.

2. The target detection method according to claim 1, wherein the second data includes class-i second data and class-j second data, wherein i and j are integers greater than 1;
   generating second data according to the plurality of pieces of first data includes:

   acquiring the class-i second data according to Ni pieces of the first data;
   acquiring the class-j second data according to Nj pieces of the first data;
   wherein Ni and Nj are positive integers, and Ni > Nj;
   detecting the second target according to the second data includes:

   detecting a class-i second target based on the class-i second data; and
   detecting a class-j second target based on the class-j second data.

3. The target detection method according to claim 1 or claim 2, wherein the first data is channel data;
   generating the second data according to the plurality of pieces of first data includes:
   superimposing the plurality of pieces of first data to acquire the second data.

4. The target detection method according to claim 1 or claim 2, wherein generating the second data according to the plurality of pieces of first data includes:

   averaging the plurality of pieces of first data to acquire zero-Doppler channel data; and
   superimposing the plurality of pieces of first data after subtracting the zero-Doppler channel data to acquire the second data.

5. The target detection method according to any one of claims 1 to 4, wherein detecting the second target according to the second data includes:

   performing slow-time dimensional FFT on the second data;
   performing constant false-alarm detection according to FFT results to detect the second target.

6. The method for target detection according to claim 1 or claim 2, wherein the first data is RD spectrum data;
   generating the second data according to the plurality of pieces of first data includes:
   deriving the second data according to the plurality of pieces of first data.

7. The target detection method according to any one of claims 1 to 6, wherein acquiring the first data comprises:
   acquiring echo data corresponding to detection signals with a preset transmission period, where the preset transmission period is not less than 50 ms; and
   generating the first data according to the echo data.

8. The target detection method according to claim 7, wherein a respective detection signal of the detection signals includes a plurality of chirp signals, and the detection signals with the preset transmission periods are acquired through at least one of the following methods: increasing a number of chirp signals included in the respective detection signal of the detection signals, extending a period of the chirp signals, and extending frame idle time between chirp signals.

9. The target detection method according to any one of claims 1 to 7, further comprising:
   performing constant false-alarm detection according to a preset threshold, wherein the threshold is equal to k multiply by noise estimation value, and k is greater than 1.

10. A target detection method, comprising:

    acquiring a plurality of targets according to target detection resultsfor each respective detected target of the plurality of targets, acquiring corresponding feature information, wherein the feature information includes a noise feature and a signal feature for characterizing the respective detected target; and
    determining confidence of the respective detected target according to the feature information.

11. The target detection method according to claim 10, wherein acquiring the corresponding feature information includes:

    acquiring an angle spectrum generated during target detection;
    determining the confidence of the respective detected target according to the feature information includes:

determining local maximum values in the angle spectrum corresponding to the respective detected target;

determining a first validity parameter according to a global maximum value among the local maximum values of the angle spectrum and an average value of other local maximum values excluding the global maximum value, wherein the first validity parameter is configured to characterize a relative magnitude between the global maximum value among the local maximum values of the angle spectrum and the average value of the other local maximum values excluding the global maximum value; and

determining the confidence of respective detected target according to the first validity parameter.

12. The target detection method according to claim 11, wherein determining the confidence of the respective detected target according to the first validity parameter includes:

determining a second validity parameter of the respective detected target according to the global maximum value and a second maximum value among the local maximum values of the angle spectrum, wherein the second validity parameter is configured to characterize a relative magnitude between the global maximum value and the second maximum value among the local maximum values of the angle spectrum;

determining whether the respective detected target is an invalid target according to the second validity parameter; and

in response to the respective detected target not belonging to an invalid target, determining the confidence of the respective detected target according to the first validity parameter.

13. The target detection method according to claim 10, wherein acquiring the corresponding feature information includes:

acquiring an entropy value of the respective detected target;

determining the confidence of each respective detected target according to the feature information includes:

determining the confidence of each respective detected target according to the entropy value.

14. The target detection method according to claim 10, wherein acquiring the corresponding feature information includes:

acquiring a signal-to-noise ratio (SNR) of the respective detected target generated by constant false-alarm detection during target detection;

determining the confidence of the respective detected target according to the feature information includes: determining the confidence of each respective detected target according to the signal-to-noise ratio.

15. A target detection method, comprising:

acquiring a first target and a second target according to the target detection method according to any one of claims 1 to 9;

for each respective detected target of the target first target and the target second target, acquiring corresponding feature information, wherein the feature information includes a noise feature and a signal feature for characterizing the respective detected target; and

determining confidence of the respective detected target according to the feature information.

16. A target point cloud output method, comprising:

acquiring a first target and a second target according to the target detection method according to any one of claims 1 to 9 or the target detection method according to claim 15; and

performing hierarchical output on the first target and the second target.

17. An integrated circuit, comprising a radio frequency (RF) module, an analog signal processing module, and a digital signal processing module connected in sequence;

wherein the RF module is configured to generate RF transmission signals and receive RF reception signals;

the analog signal processing module is configured to perform frequency down-conversion processing on the RF reception signals to acquire an intermediate frequency (IF) signals;

the digital signal processing module is configured to perform analog-to-digital conversion on the intermediate frequency signals to acquire digital signal data, and the digital signal processing module implements the target detection method according to any one of claims 1 to 9, or the target detection method according to any one of claims 10 to 14, or the target detection method according to claim 15, or the target point cloud output method according to claim 16 according to the digital signal data.

18. A sensor, comprising:

a carrier;
the integrated circuit according to claim 17, arranged on the carrier; and
an antenna, arranged on the carrier, or integrated into an integrated device with the integrated circuit to be arranged on the carrier;
wherein the integrated circuit is connected with the antenna and is configured to process an echo signal received by the antenna.

19. A terminal device, comprising:

a device body; and
the sensor according to claim 18 arranged on the device body;
wherein the sensor is configured for target detection and/or communication to provide reference information for the device body to operate.

Acquire first data ⌇ 101

Generate second data according to a plurality of pieces of first data ⌇ 102

Detect a first target according to the first data ⌇ 103

Detect a second target according to the second data ⌇ 104

FIG. 1

Acquire echo data corresponding to a detection signal with a preset transmission period, where the preset transmission period is not less than 50 ms ⌇ 201

Generate first data based on the echo data ⌇ 202

Generate second data according to a plurality of pieces of first data ⌇ 203

Detect a first target according to the first data ⌇ 204

Detect a second target according to the second data ⌇ 205

FIG. 2

| | |
|---|---|
| Acquire first data | 301 |
| Average the plurality of pieces of first data to obtain zero-Doppler channel data | 302 |
| Subtract the zero-Doppler channel data from the plurality of pieces of first data, and superimposing to obtain the second data | 303 |
| Detect a first target according to the first data | 304 |
| Detect a second target according to the second target | 305 |

FIG. 3

| | |
|---|---|
| Acquire first data | 401 |
| Acquire class-i second data according to Ni pieces of the first data | 402 |
| Acquire class-j second data according to Nj pieces of the first data | 403 |
| Detect a first target according to the first data | 404 |
| Detect a class-i second target according to the class-i second data | 405 |
| Detect a class-j second target according to the class-j second data | 406 |

FIG. 4

Acquire first data — 501

Generate second data according to a plurality of pieces of first data — 502

Detect a first target according to the first data — 503

Perform slow-time dimensional FFT according to the second data — 504

Perform constant false-alarm rate detection according to the FFT results to realize the detection of the second target — 505

FIG. 5

Acquire a plurality of targets according to target detection results — 601

For each respective detected target of the plurality of targets, acquire corresponding feature information, where the feature information includes a noise feature and a signal feature for characterizing the respective detected target — 602

Determine confidence of the respective detected target according to the feature information — 603

FIG. 6

Acquire a plurality of targets according to target detection results 701

Acquire an angle spectrum generated during the target detection process 702

Determine local maximum values in the angle spectrum corresponding to the target 703

Determine a first validity parameter according to a global maximum value among the local maximum values of the angle spectrum and an average value of other local maximum values excluding the global maximum value, where the first validity parameter is configured to characterize a relative magnitude between the global maximum value among the local maximum values of the angle spectrum and the average value of the other local maximum values excluding the global maximum value 704

Determine the confidence of each respective detected target according to the first validity parameter 705

FIG. 7

Acquire a plurality of targets according to target detection results ⌇ 801

Acquire an angle spectrum generated during the target detection process ⌇ 802

Determine local maximum values in the angle spectrum corresponding to the target ⌇ 803

Determine a first validity parameter according to a global maximum value among the local maximum values of the angle spectrum and an average value of other local maximum values excluding the global maximum value, where the first validity parameter is configured to characterize a relative magnitude between the global maximum value among the local maximum values of the angle spectrum and the average value of the other local maximum values excluding the global maximum value ⌇ 804

Determine a second validity parameter of the corresponding target according to the global maximum value and the second maximum value among the local maximum values of the angle spectrum, where the second validity parameter is configured to characterize a relative magnitude between the global maximum value and the second maximum value among the local maximum values of the angle spectrum ⌇ 805

Determine whether the corresponding target is an invalid target according to the second validity parameter ⌇ 806

In response to the corresponding target not belonging to an invalid target, determine the confidence of the target according to the first validity parameter ⌇ 807

FIG. 8

Perform target detection to acquire a first target and a second target ⌇ 901

For each respective target of the first target and the second target, acquire corresponding feature information, where the feature information includes a noise feature and a signal feature for characterizing the respective target ⌇ 902

Determine the confidence of each first target and second target according to the feature information ⌇ 903

FIG. 9

Perform target detection to determine a first target and a second target ⟋1001

Perform hierarchical output on the first target and the second target ⟋1002

FIG. 10

1101

Radio frequency module

1102

Analog signal processing module

1103

Digital signal processing module

FIG. 11

←A frame of frequency-modulated continuous wave→

A chrip
◄ signal ►
waveform

...                    ...

A

B

FIG. 12

## INTERNATIONAL SEARCH REPORT

| International application No. |
| --- |
| **PCT/CN2024/116050** |

| A. | CLASSIFICATION OF SUBJECT MATTER |
| --- | --- |

G01S7/41(2006.01)i; G01S13/06(2006.01)i

According to International Patent Classification (IPC) or to both national classification and IPC

| B. | FIELDS SEARCHED |
| --- | --- |

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS, CNTXT, VEN, CNKI: 目标, 检测, 识别, 跟踪, 锁定, 累加, 积累, 多帧, 多周期, 微动, 滑窗, 平均, 多通道, 特征, 信噪比, 置信度, MTI, MTD, target, detect, identificat+, slide, multi, frame, period, channel, SNR, fretting, accumulate, confidence

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116626638 A (HUIZHOU DESAY SV INTELLIGENT TRANSP TECHNOLOGY RESEARCH INSTITUTE CO., LTD.) 22 August 2023 (2023-08-22) description, paragraphs 4-154 | 1-9, 16-19 |
| X | CN 114578305 A (HAWKEYE TECHNOLOGY CO., LTD.) 03 June 2022 (2022-06-03) description, paragraphs 4-56 | 10-14, 16-19 |
| Y | CN 116626638 A (HUIZHOU DESAY SV INTELLIGENT TRANSP TECHNOLOGY RESEARCH INSTITUTE CO., LTD.) 22 August 2023 (2023-08-22) description, paragraphs 4-154 | 15-19 |
| Y | CN 114578305 A (HAWKEYE TECHNOLOGY CO., LTD.) 03 June 2022 (2022-06-03) description, paragraphs 4-56 | 15-19 |
| X | CN 116482638 A (SENSI TAIKE HEBEI TECHNOLOGY CO., LTD.) 25 July 2023 (2023-07-25) description, paragraphs 5-108 | 1-9, 16-19 |
| A | CN 115345908 A (SICHUAN QIRUIKE TECHNOLOGY CO., LTD.) 15 November 2022 (2022-11-15) entire document | 1-19 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **10 December 2024** | **11 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/116050**

**C.    DOCUMENTS CONSIDERED TO BE RELEVANT**

| Category* | Citation of document, with indication, where appropriate, of the relevant passages | Relevant to claim No. |
|---|---|---|
| A | CN 116500571 A (SENSI TAIKE HEBEI TECHNOLOGY CO., LTD.) 28 July 2023 (2023-07-28)<br>entire document | 1-19 |
| A | KR 102141051 B1 (HANWHA SYSTEMS CO., LTD.) 04 August 2020 (2020-08-04)<br>entire document | 1-19 |

Form PCT/ISA/210 (second sheet) (July 2022)

**INTERNATIONAL SEARCH REPORT**
Information on patent family members

International application No.

**PCT/CN2024/116050**

| Patent document cited in search report | | | Publication date (day/month/year) | Patent family member(s) | Publication date (day/month/year) |
|---|---|---|---|---|---|
| CN | 116626638 | A | 22 August 2023 | None | |
| CN | 114578305 | A | 03 June 2022 | None | |
| CN | 116482638 | A | 25 July 2023 | None | |
| CN | 115345908 | A | 15 November 2022 | None | |
| CN | 116500571 | A | 28 July 2023 | None | |
| KR | 102141051 | B1 | 04 August 2020 | None | |

Form PCT/ISA/210 (patent family annex) (July 2022)

**EP 4 707 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311127963
- CN 202311127857
- CN 202311198067
- CN 202410678539